(19) Europäisches Patentamt
European Patent Office
Office européen des brevets

(11) EP 3 875 525 A1

(12) EUROPEAN PATENT APPLICATION
published in accordance with Art. 153(4) EPC

(43) Date of publication:
**08.09.2021 Bulletin 2021/36**

(21) Application number: **20749309.9**

(22) Date of filing: **27.01.2020**

(51) Int Cl.:
***C08K 5/10*** (2006.01) ***C08K 5/34*** (2006.01)
***C08L 1/14*** (2006.01) ***C08J 5/00*** (2006.01)
***B33Y 70/00*** (2020.01) ***B33Y 80/00*** (2015.01)
***B29C 64/118*** (2017.01) ***B29C 64/314*** (2017.01)

(86) International application number:
**PCT/JP2020/002708**

(87) International publication number:
**WO 2020/158647 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.01.2019 JP 2019014530**

(71) Applicant: **KONICA MINOLTA, INC.**
**Tokyo 100-7015 (JP)**

(72) Inventors:
- **YAMAZAKI, Kazufumi**
**Tokyo 100-7015 (JP)**
- **NAKAZAWA, Yukihito**
**Tokyo 100-7015 (JP)**
- **GOTO, Kenji**
**Tokyo 100-7015 (JP)**
- **KUBO, Nobuo**
**Tokyo 100-7015 (JP)**

(74) Representative: **Gille Hrabal Partnerschaftsgesellschaft mbB**
**Patentanwälte**
**Brucknerstraße 20**
**40593 Düsseldorf (DE)**

# (54) MATERIAL FOR HOT MELT EXTRUSION SYSTEM, MODELING MATERIAL FOR 3D PRINTERS, METHOD FOR PRODUCING MODELING MATERIAL FOR 3D PRINTERS, AND THREE-DIMENSIONAL MODEL

(57) The present invention addresses the problem of providing: a material for hot melt extrusion system, which has excellent elastic modulus, while forming a model that has excellent dimensional stability under high temperature high humidity conditions; a modeling material for 3D printers; a method for producing a modeling material for 3D printers; and a three-dimensional model. A material for hot melt extrusion system according to the present invention contains at least a cellulose derivative and an additive, and is characterized in that: the cellulose derivative is a cellulose acetate propionate and satisfies formula (1) and formula (2), wherein X is the degree of substitution of acetyl groups and Y is the degree of substitution of propionyl groups; and the additive contains a plasticizer and a compound A having a partial structure that has an NICS value within the range of from -14 to -10 (inclusive). Formula (1): $2.0 \leq X + Y \leq 3.0$, Formula (2): $0.5 \leq Y \leq 2.6$.

EP 3 875 525 A1

## Description

### Technical Field

The present invention disclosure relates to a material for a hot melt extrusion method, a modeling material for a 3D printer, a method for producing a modeling material for a 3D printer, and a three-dimensional shaped article. More specifically, the present invention relates to a material for a hot melt extrusion method which is excellent in elastic modulus and dimensional stability under high temperature and high humidity of a shaped article.

### Background

In recent years, 3D printing (also called three-dimensional printing) technology has attracted attention, and in particular, the FDM-type (Fused Deposition Modeling: also called "hot melt laminate method") requires plastic materials with low environmental impact.

Cellulose resins are made of plant-derived raw materials and it is known that they have mechanical properties corresponding to engineered plastics, but natural cellulose has a lower thermal decomposition temperature than the melt temperature, and melt molding was difficult. Therefore, Patent Document 1 discloses a method of injection molding using a cellulose derivative obtained by modifying a part of a hydrogen atom of a hydroxy group of cellulose.

When considering the application of the cellulose derivative to FDM-type laminated modeling, it is assumed that various additives such as a plasticizer are added in order to adapt to conditions suitable for shaping. However, as a result, there has been a problem in that the original mechanical properties of the cellulose derivative, e.g., the elastic modulus, are lowered by the plasticizer, or the dimensional stability of the shaped article at high temperature and high humidity is deteriorated.

### Prior art Documents

### Patent Document

Patent Document 1: Japanese Patent No. 5371473

### Summary of the Invention

### Problems to be solved by the Invention

The present invention has been made in view of the above-mentioned problems and status, and an object of the present invention is to provide a material for a hot melt extrusion method, a modeling material for a 3D printer, a method for manufacturing a modeling material for a 3D printer, and a three-dimensional shaped article, which are excellent in elastic modulus, dimensional stability of the shaped article at high temperature and high humidity.

### Means to solve the Problems

In order to solve the above-mentioned problems, the present inventor has found the following in the process of examining the causes of the above-mentioned problems. Namely, it has been found that, by applying a modeling material for a 3D printer containing a specific cellulose derivative and a plasticizer and a compound having a partial structure within a specific range of NICS value to a 3D printer, a material for a hot melt extrusion method may be obtained which enables to achieve an elastic modulus and a dimensional stability at a high temperature and a high humidity, which cannot be achieved only by a plasticizer.

In other words, the above problem according to the present invention is solved by the following means.

1. A material for a hot melt extrusion method containing at least a cellulose derivative and an additive,

    wherein the cellulose derivative is cellulose acetate propionate and when a degree of substitution of an acetyl group is X and a degree of substitution of a propionyl group is Y, the cellulose derivative satisfies the following Expression (1) and Expression (2); and

    the additive contains a plasticizer and a compound A containing a partial structure having a NICS value in the range of -14 or more and -10 or less,

$$\text{Expression (1):}\quad 2.0 \leq X + Y \leq 3.0$$

$$\text{Expression (2):}\quad 0.5 \leq Y \leq 2.6.$$

2. The material for a hot melt extrusion method described in item 1, wherein the compound A has a benzene ring and a 5-membered heterocycle in the structure.
3. The material for a hot melt extrusion method described in item 1 or 2, wherein a content of the compound A is in the range of 0.1 to 30 mass %.
4. A modeling material for a 3D printer that is a monofilament yarn, wherein the monofilament yarn contain the material for a hot melt extrusion method described in any one of items 1 to 3.
5. A method for producing of a modeling material for a 3D printer, comprising the steps of:
melt-extruding the material for a hot melt extrusion method described in any one of items 1 to 3; and then cooling and solidifying the melt-extruded material in the atmosphere or water to form monofilament yarn.
6. A three-dimensional shaped article containing the material for a hot melt extrusion method described in any one of items 1 to 3, wherein the three-dimensional shaped article has an amount of dimensional change after leaving for 24 hours in an environment of 80 °C and 90 %RH within ± 5% of a dimensions before leaving the article.

**Effects of the Invention**

According to the above-mentioned measures, it is possible to provide a material for a hot melt extrusion method, a modeling material for a 3D printer, a method for manufacturing a modeling material for a 3D printer, and a three-dimensional shaped article, which are excellent in elastic modulus and dimensional stability of the shaped article at high temperature and high humidity.
The expression mechanism or action mechanism of the effect of the present invention is not clarified, but is inferred as follows.
The material for a hot melt extrusion method of the present invention is characterized in that it contains a cellulose derivative which is a cellulose acetate propionate, a plasticizer, and a compound A containing a partial structure having a NICS value of in the range of -14 or more and -10 or less, but as described above, there has been a problem that, in the combination of a cellulose derivative and a plasticizer only, an elastic modulus which is a mechanical property of a cellulose derivative is lowered by a plasticizer, or a dimensional stability of a shaped article at a high temperature and a high humidity is deteriorated.
In the material for a hot melt extrusion method of the present invention, by further adding an additive (Compound A) having a specific range of NICS value to a specific cellulose derivative, an axial hydrogen atom contained in the cellulose derivative and an additive having a strong aromaticity express an intermolecular interaction called CH-$\pi$ interaction. As a result, it may be inferred that by expressing the "anti-plasticizer effect" in which the molecular motion is limited and the strength is increased in the solid state, and the glass transition temperature is lowered in the molten state, a material excellent in elastic modulus and dimensional stability under high temperature and high humidity of the shaped article may be provided as a modeling material for a 3D printer.

**Embodiments to carry out the Invention**

A material for a hot melt extrusion method according to the present invention is a material for a hot melt extrusion method containing at least a cellulose derivative and an additive, wherein the cellulose derivative is cellulose acetate propionate, and when a degree of substitution of an acetyl group is X and a degree of substitution of a propionyl group is Y, the cellulose derivative satisfies the above Expression (1) and Expression (2), and the additive contains a plasticizer and a compound A containing a partial structure having a NICS value of -14 or more and-10 or less. This feature is a technical feature common to or corresponding to the embodiments described below.
As an embodiment of the present invention, from the viewpoint of expressing the effect of the present invention, it is preferable that the compound A has a benzene ring and a 5-membered heterocycle in its structure. This is a preferred embodiment for expressing an anti-plastic effect.
The content of the compound is preferably within a range of 0.1 to 30% by mass, more preferably 1 to 15% by mass, and still more preferably 5 to 15% by mass from the viewpoint of obtaining an anti-plasticizer effect.
The modeling material for a 3D printer of the present invention is preferably a monofilament yarn. The method for producing a modeling material for a 3D printer comprises the steps of: melt-extruding the material for a hot melt extrusion method described in any one of items 1 to 3; and then cooling and solidifying the melt-extruded material in the atmosphere or water to form monofilament yarn. This is a preferable method for producing a modeling material for a 3D

printer from the viewpoint of the effects and handling properties of the present invention.

The three-dimensional shaped article of the present invention is a three-dimensional shaped article containing the material for a hot melt extrusion method, and it is characterized in that a dimension change amount after leaving the article for 24 hours under an environment of 80 °C and 90 %RH is within ±5% of a dimension before leaving the article.

Hereinafter, detailed descriptions will be given of the present invention, its constituent elements, and configurations and embodiments for carrying out the present invention. In the present application, "to" is used in the meaning that the numerical values described before and after "to" are included as a lower limit value and an upper limit value.

«Outline of a material for a hot melt extrusion method of the present invention»

The material for a hot melt extrusion method according to the present invention is a material for a hot melt extrusion method containing at least a cellulose derivative and an additive, wherein the cellulose derivative is cellulose acetate propionate, and when the degree of substitution of an acetyl group is X and the degree of substitution of a propionyl group is Y, the cellulose derivative satisfying the following Expression (1) and Expression (2), and the additive contains a plasticizer and a compound A containing a partial structure having a NICS value in the range of -14 or more and-10 or less.

$$\text{Expression (1):} \quad 2.0 \leq X + Y \leq 3.0$$

$$\text{Expression (2):} \quad 0.5 \leq Y \leq 2.6.$$

The cellulose derivative according to the present invention is characterized in that it satisfies Expression (1) and Expression (2). When the substituent is only an acetyl group, the hot-melt ability is small, and when the substituent is an alkyl group having carbon atom number of 3 more, the interaction with Compound A becomes weak.

The total substitution amount (X + Y) in the range of 2.0 to 3.0 is the range of the substitution degree in which the cellulose derivative may be melted at a low temperature. When the degree of substitution falls outside this range, the melting temperature becomes high, and the physical properties of the obtained cellulose derivative are lowered by the melting process. More preferably, it is in the range of 2.5 to 2.8.

Further, although the value of Y, which is the degree of substitution by propionic acid, is within a range of 0.5 to 2.6, it is necessary that the effect of improving the hot-melt ability of the cellulose derivative is small when it is less than 0.5, and that it becomes sterically hindered when it is larger than 2.6, so that the interaction of the cellulose derivative with Compound A becomes weak, therefore, it is necessary that the value of Y is in the range of Formula (2).

In addition, a position at which an organic acid substituents the cellulose is a 2 position, a 3 position, and a 6 position of a glucose unit, a 2 position and a 3 position are a secondary hydroxy group, and a 6 position is a primary hydroxy group, and a higher order structure and physical properties of the cellulose derivative may be somewhat changed depending on which position propionic acid replaces. In the material for a hot melt extrusion method of the present invention, a cellulose derivative in which propionic acid is at any substitution position may be preferably used.

In order to estimate the elastic modulus of a three-dimensional shaped article which was prepared by laminated modeling with the FDM method using the material for a hot melt extrusion method, a test piece obtained by injection molding the material using a small kneader manufactured by Xplore Corporation is humidified at 23 °C and 55 %RH for 24 hours, and the elastic modulus is determined by using a tensile tester TENSILON RTC-1250A manufactured by Orientec Co., Ltd., according to the method described in JIS K7127. The shape of the test piece is a test piece NO. 1, the test speed under the condition of 10 mm/min, measured in the direction every 15° from 0° with respect to any direction, the maximum value of the determined elastic modulus is determined as the elastic modulus.

The elastic modulus is preferably greater than or equal to 2.0 GPa, preferably in the range of 3.0 to 8.0 GPa, and more preferably in the range of 3.5 to 7.0 GPa in order to form a 3 dimensional shaped article having higher strength.

Hereinafter, the components of the present invention will be described in more detail.

[1] Cellulose derivative

The cellulose derivative according to the present invention is cellulose acetate propionate, and is characterized in that it is a cellulose derivative satisfying the following Expression (1) and Expression (2) when the degree of substitution of an acetyl group is X and the degree of substitution of a propionyl group is Y.

$$\text{Expression (1):} \quad 2.0 \leq X + Y \leq 3.0$$

$$\text{Expression (2):} \quad 0.5 \leq Y \leq 2.6.$$

The significance of Expression (1) and Expression (2) is as described above. The method for measuring the degree of substitution of the above acyl group may be measured according to ASTM-D817-96.

The weight average molecular weight Mw of the cellulose derivative is preferably in the range of 80000 to 300000, and more preferably in the range of 120000 to 250000, from the viewpoint of controlling the elastic modulus and the dimensional stability. Within the above-mentioned range, the elastic modulus is easily controlled during the laminated modeling in the FMD method, and the dimensional stabilization of the three-dimensional shaped article and the bleed out resistance of the additive are improved.

The number average molecular weight (Mn) of the cellulose derivative is preferable in the range of 30000 to 150000 because the mechanical strength of the three-dimensional shaped article obtained is high. In addition, cellulose derivatives having Mw in the range of 40000-100000 are preferably used.

The value of the ratio (Mw/Mn) of the weight average molecular weight (Mw) to the number average molecular weight (Mn) of the cellulose derivative is preferably in the range of 1.4 to 3.0.

The weight average molecular weight Mw and the number average molecular weight Mn of the cellulose derivative may be measured using gel permeation chromatography (GPC).

The measurement conditions are as follows.

| | |
|---|---|
| Solvent: | Dichloromethane |
| Columns: | Shodex K806, K805, K803G (three columns manufactured by Showa Denko K.K.) were connected and used) |
| Column temperature: | 25 °C |
| Sample concentration: | 0.1% by weight |
| Detector: | RI Model 504 (manufactured by GL Sciences Inc.) |
| Pumps: | L6000 (manufactured by Hitachi, Ltd.) |
| Flow rate: | 1.0 mL/min |
| Calibration curves: | Calibration curves with 13 samples of standard polystyrene STK standard polystyrene (manufactured by Tosoh Corporation) Mw=500-1000000 were used. 13 samples are used at approximately equal intervals. |

The raw cellulose of the cellulose derivative used in the present invention may be a wood pulp or a cotton linter, and the wood pulp may be a softwood or a hardwood, but more preferably a softwood. From the viewpoint of releasing ability during film formation, cotton linter is preferably used. The cellulose derivatives made from these may be appropriately mixed or used alone.

For example, the ratio of cellulose derivative from cotton linter: cellulose derivative from wood pulp (softwood): cellulose derivative derived from wood pulp (hardwood) may be used at 100:0:0, 90:10:0, 85:15:0, 50:50:0, 20:80:0, 10:90:0, 0:100:0, 0:0:100, 80:10:10, 85:0:15, and 40:30:30.

The cellulose derivative according to the present invention may be produced by a known method. Generally, cellulose of a raw material is mixed with a predetermined organic acid (acetic acid and propionic acid) and an acid anhydride (acetic anhydride and propionic anhydride), and a catalyst (sulfuric acid) to esterify cellulose, and the reaction proceeds until a triester of cellulose is formed. In the triester, the three hydroxy groups of the glucose unit are replaced by the acyl acid of the organic acid. When 2 kinds of organic acids are used at the same time, a cellulose ester of a mixed ester type, for example, cellulose acetate propionate or cellulose acetate butyrate may be produced. Then, a cellulose ester having a desired acyl substitution degree is synthesized by hydrolyzing a triester of cellulose. Thereafter, a cellulose derivative is formed through a step such as filtration, precipitation, water washing, dehydration, and drying.

It is preferable that when 1 g of the cellulose derivative according to the present invention is charged into 20 mL of pure water (electric conductivity: 0.1 μS/cm or less, pH 6.8), and stirred at 25 °C for 1hr in a nitrogen atmosphere, the pH is in the range of 6 to 7 and the electric conductivity is in the range of 1 to 100 μS/cm.

The cellulose derivative according to the present invention may be specifically synthesized with reference to the method described in JP-A 10-45804 and JP-A 2017-170881.

[2] Plasticizer

The plasticizer according to the present invention is not particularly limited, and examples thereof include a

polyester compound, a polyhydric alcohol ester compound, a polyvalent carboxylic acid ester compound (including a phthalic acid ester compound), a glycolate compound, and an ester compound (including a aliphatic acid ester compound and a phosphoric acid ester compound). These may be used alone or in combination of 2 or more thereof.

A preferred plasticizer for the material for the hot melt extrusion method of the present invention will be described.

The dicarboxylic acid constituting the polyester compound is an aromatic dicarboxylic acid, an aliphatic dicarboxylic acid or an alicyclic dicarboxylic acid, and is preferably an aromatic dicarboxylic acid. The dicarboxylic acid may be one kind or a mixture of 2 or more kinds.

The diol constituting the polyester compound is an aromatic diol, an aliphatic diol or an alicyclic diol, preferably an aliphatic diol, and more preferably a diol having 1 to 4 carbon atoms. The diol may be one kind or a mixture of 2 or more kinds.

Among them, the polyester compound preferably contains a repeating unit obtained by reacting a dicarboxylic acid containing at least an aromatic dicarboxylic acid with a diol having 1 to 4 carbon atoms, and more preferably contains a repeating unit obtained by reacting a dicarboxylic acid containing an aromatic dicarboxylic acid and an aliphatic dicarboxylic acid with a diol having 1 to 4 carbon atoms.

The both ends of the molecule of the polyester compound may or may not be sealed, but are preferably sealed from the viewpoint of reducing moisture permeability of the three-dimensional shaped article.

The polyester compound is preferably a compound having a structure represented by the following Formula (I) or (II). In the following Formulas, n is an integer of 1 or more.

$$\text{Formula (I):}\quad B\text{-}(G\text{-}A)_n\text{-}G\text{-}B$$

$$\text{Formula (II):}\quad C\text{-}(A\text{-}G)_n\text{-}A\text{-}C$$

A of Formulas (I) and (II) represents a divalent group derived from an alkylene dicarboxylic acid having 3 to 20 carbon atoms (preferably 4 to 12), a divalent group derived from an alkenylene dicarboxylic acid having 4 to 20 carbon atoms (preferably 4 to 12), or a divalent group derived from an aryl dicarboxylic acid having 8 to 20 carbon atoms (preferably 8 to 12).

Examples of the divalent group derived from an alkylene dicarboxylic acid having 3 to 20 carbon atoms in A include divalent groups derived from 1,2-ethanedicarboxylic acid (succinic acid), 1,3-propanedicarboxylic acid (glutaric acid), 1,4-butanedicarboxylic acid (adipic acid), 1,5-pentanedicarboxylic acid (pimelic acid), and 1,8-octanedicarboxylic acid (sebacic acid). Examples of the divalent group derived from an alkenylene dicarboxylic acid having 4 to 20 carbon atoms in A include divalent groups derived from maleic acid, and fumaric acid. Examples of the divalent group derived from an aryldicarboxylic acid having 8 to 20 carbon atoms in A include divalent groups derived from a naphthalenedicarboxylic acid such as 1,2-benzenedicarboxylic acid (phthalic acid), 1,3-benzenedicarboxylic acid, 1,4-benzenedicarboxylic acid, and 1,5-naphthalenedicarboxylic acid.

A may be one type or two or more types may be combined. Among them, A is preferably a combination of an alkylene dicarboxylic acid having 4 to 12 carbon atoms and an aryl dicarboxylic acid having 8 to 12 carbon atoms.

G of Formulas (I) and (II) represents a divalent group derived from an alkylene glycol having 2 to 20 carbon atoms (preferably 2 to 12), a divalent group derived from an aryl glycol having 6 to 20 carbon atoms (preferably 6 to 12), or a divalent group derived from an oxyalkylene glycol having 4 to 20 carbon atoms (preferably 4 to 12).

Examples of the divalent groups derived from an alkylene glycol having 2 to 20 carbon atoms in G include divalent groups derived from ethylene glycol, 1,2-propylene glycol, 1,2-butanediol, 1,2-propanediol, 2-methyl-1,3-propanediol, 1,5-pentanediol, 2,2-dimethyl-1,3-propanediol (neopentyl glycol), 2,2-Diethyl-1,3-propanediol(3,3 -dimethylolpentane), 2-n-butyl-2-ethyl-1,3 -propanediol(3,3 -dimethylolheptanediol), 1,6-hexanediol, 2,2,4-trimethyl-1,3-pentanediol, 2-methyl-1,8-octanediol, 1,9-nonanediol, 1,10-decanediol, and 1,12-octadecanediol.

Examples of the divalent group derived from an aryl glycol having 6 to 20 carbon atoms in G include divalent groups derived from 1,2-dihydroxybenzene (catechol), 1,3-dihydroxybenzene (resorcinol), and 1,4-dihydroxybenzene (hydroquinone). Examples of the divalent group derived from an oxyalkylene glycol having 4 to 12 carbon atoms in G include divalent groups derived from diethylene glycol, triethylene glycol, tetraethylene glycol, dipropylene glycol, and tripropylene glycol.

One type or two or more types of G may be combined. Among them, G is preferably an alkylene glycol having 2 to 12 carbon atoms.

B of the general formula (I) is a monovalent group derived from an aromatic ring-containing monocarboxylic acid or an aliphatic monocarboxylic acid.

The aromatic ring-containing monocarboxylic acid in the monovalent group derived from an aromatic ring-containing monocarboxylic acid is a carboxylic acid containing an aromatic ring in the molecule, and includes not only

those in which an aromatic ring is directly bonded to a carboxy group but also those in which an aromatic ring is bonded to a carboxy group via an alkylene group. Examples of the monovalent group derived from an aromatic ring-containing monocarboxylic acid include monovalent groups derived from benzoic acid, para-tert-butylbenzoic acid, ortho-toluic acid, meta-toluic acid, para-toluic acid, dimethylbenzoic acid, ethylbenzoic acid, normal-propylbenzoic acid, aminobenzoic acid, acetoxybenzoic acid, phenylacetic acid, and 3-phenylpropionic acid.

Examples of the monovalent group derived from an aliphatic monocarboxylic acid include monovalent groups derived from acetic acid, propionic acid, butanoic acid, caprylic acid, caproic acid, decanoic acid, dodecanoic acid, stearic acid, and oleic acid. Of these, monovalent groups derived from an alkyl monocarboxylic acid having 1 to 3 carbon atoms of an alkyl moiety are preferred, and an acetyl group (a monovalent group derived from acetic acid) is more preferred.

C of Formula (II) is a monovalent group derived from an aromatic ring-containing monoalcohol or an aliphatic monoalcohol.

The aromatic ring-containing monoalcohol is an alcohol containing an aromatic ring in the molecule, and includes not only those in which an aromatic ring is directly bonded to an OH group but also those in which an aromatic ring is bonded to an OH group via an alkylene group. Examples of the monovalent group derived from an aromatic ring-containing monoalcohol include monovalent groups derived from benzyl alcohol and 3-phenylpropanol.

Examples of the monovalent group derived from an aliphatic monoalcohol include monovalent groups derived from methanol, ethanol, propanol, isopropanol, butanol, isobutanol, pentanol, isopentanol, hexanol, isohexanol, cyclohexyl alcohol, octanol, isooctanol, 2-ethylhexyl alcohol, nonyl alcohol, iso-nonyl alcohol, tert-nonyl alcohol, decanol, dodecanol, dodecahexanol, dodecaoctanol, allyl alcohol, and oleyl alcohol. Among them, a monovalent group derived from an alcohol having 1 to 3 carbon atoms such as methanol, ethanol, propanol, or isopropanol is preferred.

The weight average molecular weight of the polyester compound is preferably in the range of 500 to 3000, and more preferably in the range of 600 to 2000. When the weight average molecular weight is within the above range, bleed out resistance from the three-dimensional shaped article of the polyester compound according to the present invention may be satisfied. The weight average molecular weight may be measured by the gel permeation chromatography (GPC).

The polyhydric alcohol ester compound is an ester compound (alcohol ester) of an aliphatic polyhydric alcohol having 2 or more valences and a monocarboxylic acid, and is preferably an aliphatic polyhydric alcohol ester having 2 to 20 valences. The polyhydric alcohol ester compound preferably has an aromatic ring or a cycloalkyl ring in its molecule.

Preferred examples of the aliphatic polyhydric alcohol include ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, dibutylene glycol, 1,2,4-butanetriol, 1,5-pentanediol, 1,6-hexanediol, hexanetriol, trimethylolpropane, pentaerythritol, trimethylolethane, and xylitol. Among these, triethylene glycol, tetraethylene glycol, dipropylene glycol, tripropylene glycol, sorbitol, trimethylolpropane, and xylitol are preferred.

The monocarboxylic acid is not particularly limited and may be an aliphatic monocarboxylic acid, an alicyclic monocarboxylic acid, or an aromatic monocarboxylic acid. In order to enhance the moisture permeability of the three-dimensional shaped article and to make it difficult to volatilize, an alicyclic monocarboxylic acid or an aromatic monocarboxylic acid is preferred. The monocarboxylic acid may be one kind or a mixture of 2 or more kinds. In addition, all of the OH groups contained in the aliphatic polyhydric alcohol may be esterified, or a part thereof may be left as an OH group.

The aliphatic monocarboxylic acid is preferably a aliphatic acid having a straight or side chain having 1 to 32 carbon atoms. The number of carbon atoms of the aliphatic monocarboxylic acid is more preferably 1 to 20, and still more preferably 1 to 10. Examples of the aliphatic monocarboxylic acid include saturated aliphatic acids such as acetic acid, propionic acid, butyric acid, valeric acid, caproic acid, enanthic acid, caprylic acid, pelargonic acid, capric acid, 2-ethyl-hexanoic acid, undecylic acid, lauric acid, tridecylic acid, myristic acid, pentadecylic acid, palmitic acid, heptadecic acid, stearic acid, nonadecanic acid, araquinic acid, behenic acid, lignoceric acid, cerotic acid, heptacosanoic acid, montanic acid, melisic acid, and laxeric acid; and unsaturated aliphatic acids such as undecylenic acid, oleic acid, sorbic acid, linoleic acid, linolenic acid, and arachidonic acid. Among them, acetic acid or a mixture of acetic acid and other monocarboxylic acid is preferable in order to enhance the compatibility with cellulose acetate.

Examples of the alicyclic monocarboxylic acid include cyclopentanecarboxylic acid, cyclohexanecarboxylic acid, and cyclooctanecarboxylic acid.

Examples of the aromatic monocarboxylic acid include benzoic acid; those obtained by introducing 1 to 3 alkyl or alkoxy groups (e.g., methoxy group and ethoxy groups) into the benzene ring of benzoic acid (e.g., toluic acid); and aromatic monocarboxylic acids having 2 or more benzene rings (e.g., biphenylcarboxylic acid, naphthalenecarboxylic acid, and tetralincarboxylic acid). Further, a preferable example is benzoic acid.

Specific examples of polyhydric alcohol ester compounds include compounds described in JP-A 2006-113239, paragraphs [0058] to [0061].

The polyvalent carboxylic acid ester compound is an ester compound of a polyvalent carboxylic acid having 2 or more valences, preferably 2 to 20 valences, and an alcohol compound. The polyvalent carboxylic acid is preferably an aliphatic polyvalent carboxylic acid having 2 to 20 valences, an aromatic polyvalent carboxylic acid having 3 to 20

valences, or an alicyclic polyvalent carboxylic acid having 3 to 20 valences.

Examples of the polyvalent carboxylic acid include aromatic polyvalent carboxylic acids having 3 or more valences such as trimellitic acid, trimesic acid, and pyromellitic acid, or derivatives thereof; aliphatic polyvalent carboxylic acids such as succinic acid, adipic acid, azelaic acid, sebacic acid, oxalic acid, fumaric acid, maleic acid tetrahydrophthalic acid; and oxypolyvalent carboxylic acids such as tartaric acid, tartronic acid, malic acid, and citric acid. In order to suppress volatilize from a three-dimensional shaped article, an oxypolyvalent carboxylic acid is preferred.

Examples of the alcohol compound include an aliphatic saturated alcohol compound having a straight or side chain, an aliphatic unsaturated alcohol compound having a straight or side chain, an alicyclic alcohol compound, and an aromatic alcohol compound. The number of carbon atoms of the aliphatic saturated alcohol compound or the aliphatic unsaturated alcohol compound is preferably 1 to 32, more preferably 1 to 20, and still more preferably 1 to 10. Examples of the alicyclic alcohol compound include cyclopentanol and cyclohexanol. Examples of the aromatic alcohol compound include benzyl alcohol and cinnamyl alcohol.

The molecular weight of the polyvalent carboxylic acid ester compound is not particularly limited, but is preferably in the range of 300 to 1000, and more preferably in the range of 350 to 750. The molecular weight of the polyvalent carboxylic acid ester-based plasticizer is preferably large from the viewpoint of suppressing bleed-out, and is preferably small from the viewpoint of moisture permeability and compatibility with cellulose acetate.

Examples of the polyvalent carboxylic acid ester compound include triethyl citrate, tributyl citrate, acetyl triethyl citrate (ATEC), acetyl tributyl citrate (ATBC), benzoyl tributyl citrate, acetyl triphenyl citrate, acetyl tribenzyl citrate, dibutyl tartrate, diacetyl dibutyl tartrate, tributyl trimellitate, and tetrabutyl pyromellitate.

The polyvalent carboxylic acid ester compound may be a phthalic acid ester compound. Examples of the phthalic acid ester compound include diethyl phthalate, dimethoxyethyl phthalate, dimethyl phthalate, dioctyl phthalate, dibutyl phthalate, di-2-ethylhexyl phthalate, dioctyl phthalate, dicyclohexyl phthalate, and dicyclohexyl terephthalate.

Examples of the glycolate compound include alkyl phthalyl alkyl glycolate. Examples of the alkyl phthalyl alkyl glycolate include methyl phthalyl methyl glycolate, ethyl phthalyl ethyl glycolate, propyl phthalyl propyl glycolate, butyl phthalyl butyl glycolate, octyl phthalyl octyl glycolate, methyl phthalyl ethyl glycolate, ethyl phthalyl methyl glycolate, ethyl phthalyl propyl glycolate, methyl phthalyl butyl glycolate, ethyl phthalyl butyl glycolate, butyl phthalyl methyl glycolate, butyl phthalyl ethyl glycolate, propyl phthalyl butyl glycolate, butyl phthalyl propyl glycolate, methyl phthalyl octyl glycolate, ethyl phthalyl octyl glycolate, octyl phthalyl methyl Glycolate, and octyl phthalyl ethyl glycolate. And a preferable glycolate compound is ethyl phthalyl ethyl glycolate.

The ester compound includes an aliphatic acid ester compound, a citric acid ester compound, and a phosphoric acid ester compound.

Examples of the aliphatic acid ester compound include butyl oleate, methylacetyl ricinolate, and dibutyl sebacate. Examples of the citric acid ester compound include acetyltrimethyl citrate, acetyltriethyl citrate, and acetyltributyl citrate. Examples of phosphate ester compounds include triphenylphosphate, tricresylphosphate, cresyldiphenylphosphate, octyldiphenylphosphate, biphenyldiphenylphosphate, trioctylphosphate, and tributylphosphate. A preferable phosphate ester compound is triphenylphosphate.

Among them, a polyester compound, a polyhydric alcohol ester compound and a glycolate compound are preferred, and a polyester compound and a polyhydric alcohol ester compound are particularly preferred.

The content of the plasticizer is preferably in the range of 1 to 20% by mass, and more preferably in the range of 1.5 to 15% by mass, based on the material for the heat-melt extrusion method. When the content of the plasticizer is within the above range, the effect of imparting plasticity may be exhibited, and the bleed out resistance of the plasticizer from the three-dimensional shaped article is also excellent.

[3] Compound A

The compound A according to the present invention is a compound containing a partial structure having a NICS value in the range of -14 or more and -10 or less, and preferably has a benzene ring and a 5-membered heterocycle in the structure.

Further, the molecular weight is preferably 250 or more from the viewpoint of volatility, and more preferably in the range of 250 to 10000.

Compound A, which has a large number of interaction units and has a molecular weight in the range of 250 to 10000, may act to pseudo-crosslink the cellulose derivatives with each other because the number of interaction points increases, and may further suppress the molecular chain motion of the cellulose derivatives. When the molecular weight of Compound A is less than 250, the number of interaction points is small, and the molecular motion of the cellulose derivative may not be suppressed, and when the molecular weight exceeds 10000, Compound A is aggregated due to the difference in compatibility between Compound A and the cellulose derivative, which causes a decrease in haze and a decrease in mechanical properties.

Further, when the NICS value is within a range of -14 or more and-10 or less, physical properties may be

improved by interaction forces such as π-π interaction, CH-π interaction, and hydrogen bonding with the cellulose derivative. When the NICS value of Compound A is less than -14, the interaction force is strong, and crystallization of Compound A proceeds due to its own intermolecular force, and when the NICS value exceeds -10, the interaction force is weak and suitable interaction with the cellulose derivative may not be performed.

(NICS value)

For example, when a π-π interaction is formed using π electrons of the cellulose derivative having an aromatic site and Compound A, it is naturally better that the π property of Compound A is stronger. There is an index called NICS value (nucleus-independent chemical shift) as an example of expressing the strength of this π-property in a brief manner.

This NICS value is an indicator used for the quantification of aromaticity due to magnetic properties, and if the ring is aromatic, its ring current effect strongly shields the center of the ring, and when it is anti-aromatic, it is counter-shielded (J. Am. Chem. Soc., 1996, 118, 6317). By the magnitude of the NICS value it is possible to determine the strength of the ring current, that is, the contribution of π electrons to the aromaticity of the ring. Specifically, it represents a chemical shift (calculated value) of a virtual lithium ion placed directly at the ring inner center, and the negatively larger this value, the stronger the π property.

Several reports have been made on the measurement of the NICS value. For example, measured values have been reported in literature such as Canadian Journal of Chemistry, 2004, 82, 50-69, and The Journal of Organic Chemistry, 2000, 67, 1333-1338.

The NICS values are calculated using Gaussian09 (Revision C. 01, Gaussian Software). Specifically, first, the structure is optimized by using B3LYP (density functional method) as the calculation method and 6-31G* (a function obtained by adding a polarization function to the split-valence basis set) as the basis function. Subsequently, using the optimized structure, a dummy atom is placed at the central of the ring for calculating a NICS value, then one point is calculated by the NMR shielding constant calculating method (GIAO) with the basis function 6-311G** to which the variance function is added, and the value obtained by multiplying the NMR shielding constant of the obtained dummy atom by -1 is taken as the NICS value.

The NICS values for typical ring structures described in the document are shown in Table I.

Table I

| Ring type | NICS value |
|---|---|
| Pyrrole ring | -14.87 |
| Thiophene ring | -14.09 |
| Furan ring | -12.42 |
| Benzene ring | -7.98 |
| Naphthalene ring | -8.11 |
| Pyrazole ring | -13.82 |
| Imidazole ring | -13.28 |
| 1H-1,2,4-Triazole ring | -13.18 |
| 1,2,3-Oxadiazole ring | -12.74 |
| 1,2,5-Oxadiazole ring | -12.44 |
| 1,3-Thiazole ring | -12.82 |
| 1,2,4-Thiadiazole ring | -13.23 |

As shown in Table I, it is predicted that a 5-membered aromatic heterocycle such as a pyrrole ring, a thiophene ring, or a furan ring becomes larger in NICS value than an aromatic hydrocarbon ring such as a benzene ring or a naphthalene ring, and thus a π/π interaction may be strengthened by using such a 5-membered aromatic ring.

The π/π interaction is an intermolecular force acting between two aromatic rings, and since the aromatic ring has a large polarizability, it is an intermolecular force in which the dispersion force (London dispersion force) contributes greatly. Therefore, the aromatic ring having a broad π-conjugated system becomes more polarizable and more prone to π/π interactions. Benzene, which is a 6π electron system, has the most stable structure when another benzene ring is vertically arranged on one benzene ring and the benzene ring and a hydrogen atom interact with CH/π. While, naph-

thalene (10 $\pi$ electrons) and anthracene (14 $\pi$ electrons) having a wide $\pi$-conjugated system are the most stable when the aromatic rings are stacked by $\pi/\pi$ interactions, indicating that $\pi/\pi$ interactions of a wide aromatic ring having a $\pi$-conjugated system are strong.

Further, as a result of the study by the present inventors, it has been considered that, if an interaction such as a charge transfer interaction or a hydrogen bond is also utilized in addition to a $\pi/\pi$ interaction force, it may be strongly coordinated to a resin. In other words, by using a compound having a donor property and an acceptor property capable of performing a charge transfer interaction or a compound having a hydrogen bonding site in addition to aromaticity, it is possible to stabilize the compound A in a state in which the compound A enters between the packed cellulose derivatives, and it is considered that it is effective for improving physical properties such as high mechanical properties by adopting an aggregated structure and an oriented structure.

(Compound having a structure represented by Formula (1))

The compound A according to the present invention is preferably a compound having a structure represented by the following Formula (1).

Formula (1)

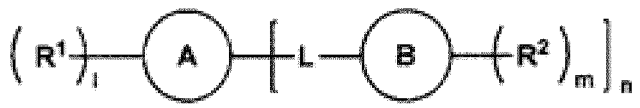

In Formula (1), a ring A represents a 5-membered or 6-membered aromatic hydrocarbon ring or an aromatic heterocycle. $R^1$ represents a hydrogen atom or a substituent and when there are a plurality of $R^1$, $R^1$ may be the same or different from each other. L represents a single bond, an oxygen atom, a sulfur atom, an amide group, a sulfonyl group, an amino group, a sulfide group, a carbonyl group, a phosphate ester group, an acyclic aliphatic hydrocarbon group, a cyclic aliphatic hydrocarbon group, an aliphatic heterocyclic group, an aromatic hydrocarbon ring group, an aromatic heterocyclic group, or a divalent linking group formed by a combination thereof. A ring B represents a 5-membered or 6-membered aromatic hydrocarbon ring or an aromatic heterocycle. $R^2$ represents a hydrogen atom or a substituent. When there are a plurality of "L-ring B-$R^2$" unit, the "L-ring B-$R^2$" unit may be the same or different from each other. 1 represents an integer of 0 to 5, m represents an integer of 1 to 5, and n represents an integer of 1 to 6.

Examples of the 5-membered or 6-membered aromatic heterocycle represented by the A ring and the ring B include an oxazole ring, an oxadiazole ring, an oxatriazole ring, an isoxazole ring, a tetrazole ring, a thiadiazole ring, a thiatriazole ring, an isothiazole ring, a thiophene ring, a furan ring, a pyrrole ring, a pyridine ring, a pyridazine ring, a pyrimidine ring, a pyrazine ring, a triazine ring, an imidazole ring, a pyrazole ring, and a triazole ring.

Examples of the acyclic aliphatic hydrocarbon group represented by L include alkylene groups such as a methylene group, an ethylene group, an n-propylene group, an iso-propylene group, an n-butylene group, an isobutylene group, an s-butylene group, a t-butylene group, a pentylene group, a hexylene group, and an octylene group. A portion thereof may be saturated or unsaturated, and may be linear or branched, and may contain a hetero atom such as an oxygen atom.

Examples of the cyclic aliphatic hydrocarbon group represented by L include cycloalkylene groups such as a cyclopropylene group, a cyclobutylene group, a cyclopentylene group, and a cyclohexylene group. A portion thereof may be saturated or unsaturated, and may have a substituent, and may contain a hetero atom such as an oxygen atom.

Examples of the aliphatic heterocyclic group represented by L include divalent groups derived from a 2-oxopyrrolidine ring, a piperidine ring, a piperazine ring, a morpholine ring, a tetrahydrofuran ring, a tetrahydropyran ring, and a tetrahydrothiophene ring.

The substituent represented by $R^1$ and $R^2$ is not particularly limited as long as the effects of the present invention are not impaired. Examples thereof include a hydrogen atom, a halogen atom (fluorine atom, chlorine atom, bromine atom, and iodine atom), an alkyl group (methyl group, ethyl group, n-propyl group, isopropyl group, tert-butyl group, n-octyl group, and 2-ethylhexyl group), a cycloalkyl group (cyclohexyl group, cyclopentyl group, and 4-n-dodecylcyclohexyl group), an alkenyl group (vinyl group and allyl group), a cycloalkenyl group (2-cyclopenten-1-yl and 2-cyclohexene-1-yl group), an alkynyl group (ethynyl group and propargyl group), an aryl group (phenyl group, p-tolyl group, and naphthyl group), a heteroaryl group (2-pyrrole group, 2-furyl group, 2-thienyl group, pyrrole group, imidazolyl group, oxazolyl group, thiazolyl group, benzoimidazolyl group, benzo Oxazolyl group, 2-benzothiazolyl group, pyrazolinone group, pyridyl group, pyridinone group, and 2-pyrimidinyl group), a cyano group, a hydroxy group, a nitro group, a carboxy group, an alkoxy group (methoxy group, ethoxy group, isopropoxy group, tert-butoxy group, n-octyloxy group, and 2-methoxyethoxy group), an aryloxy group (phenoxy group, 2-methylphenoxy group, 3-nitrophenoxy group, and 2-tetradecanoylaminophenoxy group), an acyl group (acetyl group and pyvaloylbenzoyl group), an acyloxy group (formyloxy group, acetyloxy group, pivaloyloxy group, stearoyloxy group, benzoyloxy group, and p-methoxyphenylcarbonyloxy group), an amino group (amino group, methylamino group, dimethylamino group, anilino group, N-methyl-anilino group, and diphenylamino group), an acylamino group (formylamino group, acetylamino group, pivaloylamino group, lauroylamino group, and benzoylamino group), an alkyl and an arylsulfonylamino group (methylsulfonylamino group, butylsulfonylamino group, phenylsulfonylamino group, 2,3,5-trichlorophenylsulfonylamino group, and p-methylphenylsulfonylamino group), a mercapto group, an alkylthio group (methylthio group, ethylthio group, and n-hexadecylthio group), an arylthio group (phenylthio group, p-chlorophenylthio group, and m-methoxyphenylthio group), a sulfamoyl group (N-ethylsulfamoyl group, N-(3-dodecyloxypropyl)sulfamoyl group, N, N-dimethylsulfamoyl group, N-acetylsulfamoyl group, N-benzoylsulfamoyl group, and N-(N'-phenylcarbamoyl)sulfamoyl group), a sulfo group, and a carbamoyl group (carbamoyl group, N-methylcarbamoyl group, N, N-dimethylcarbamoyl group, N,N-di-n-octylcarbamoyl group, and N-(methylsulfonyl)carbamoyl group). These groups may be further substituted with similar groups.

(Compound having a structure represented by Formula (2))

The compound having a structure represented by the above Formula (1) is more preferably a compound having a structure represented by the following Formula (2).

Formula (2)

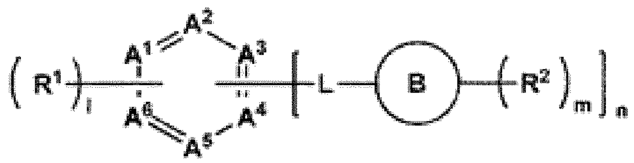

In Formula (2), $A^1$ to $A^6$ each independently represent a carbon atom or a nitrogen atom, and at least two of $A^1$ to $A^6$ are a carbon atom. $R^1$ represents a hydrogen atom or a substituent, and when there are a plurality of $R^1$, $R^1$ may be the same or different from each other. L represents a single bond, an oxygen atom, a sulfur atom, an amide group, a sulfonyl group, an amino group, a sulfide group, a carbonyl group, a phosphate ester group, an acyclic aliphatic hydrocarbon group, a cyclic aliphatic hydrocarbon group, an aliphatic heterocyclic group, an aromatic hydrocarbon ring group, an aromatic heterocyclic group, or a divalent linking group formed by a combination thereof. A ring B represents a 5 or 6-membered aromatic hydrocarbon ring or an aromatic heterocycle. $R^2$ represents a hydrogen atom or a substituent. When there are a plurality of "L-ring B-$R^2$" unit, the "L-ring B-$R^2$" unit may be the same or different from each other. 1 represents an integer of 0 to 5, m represents an integer of 1 to 5, and n represents an integer of 1 to 6.

The rings formed by $A^1$ to $A^6$ include a benzene ring, a pyridine ring, a pyrazine ring, a pyrimidine ring, a triazine ring, and a tetrazine ring.

B, L, $R^1$ and $R^2$ in Formula (2) are synonymous with B, L, $R^1$ and $R^2$ in Formula (1).

Specific Exemplified Compounds 1 to 75 of Compound A according to the present invention are shown below, but are not limited thereto. Also, Compound A may be a tautomer and may form a hydrate, solvate or salt.

1

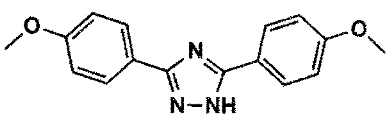

2

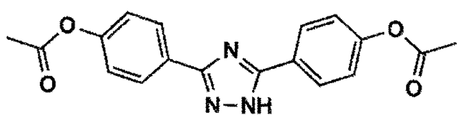

3

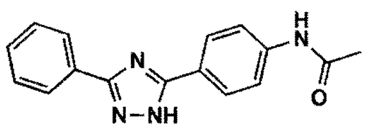

4

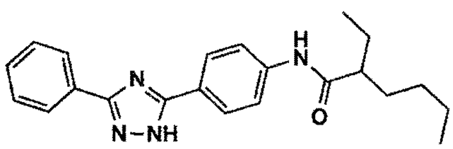

5

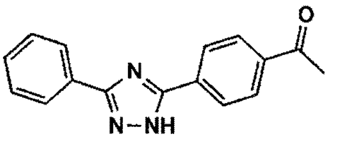

6

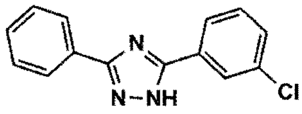

7

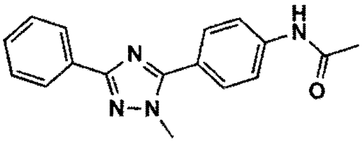

8

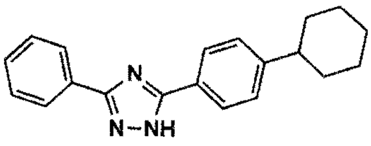

9

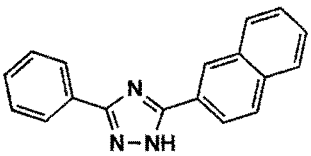

10

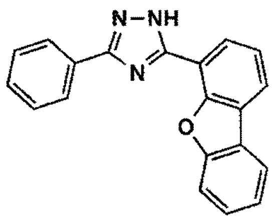

11

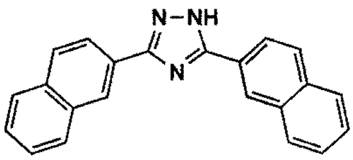

12

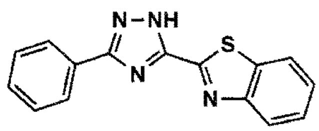

13

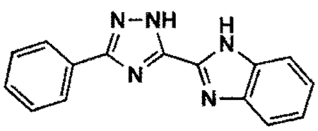

14

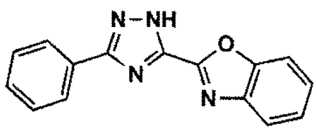

15

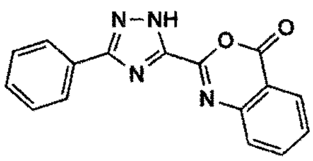

16

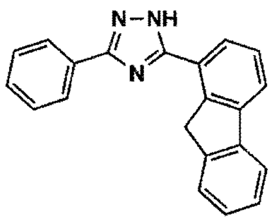

17

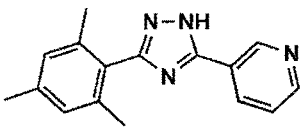

18

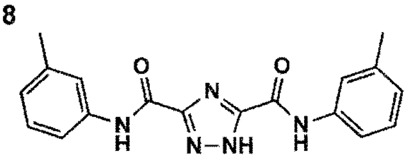

19

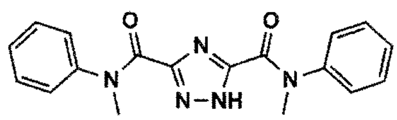

20

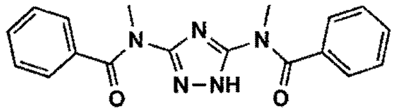

21

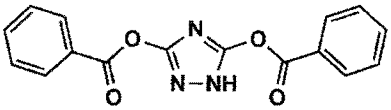

22

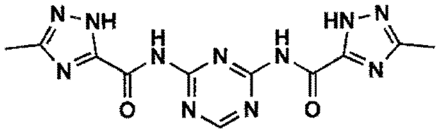

23

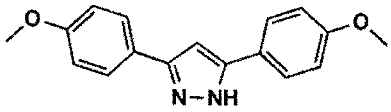

24

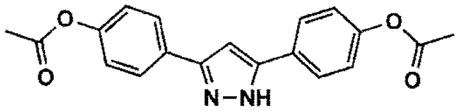

25

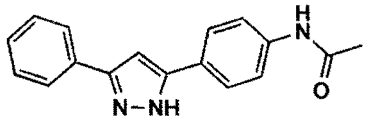

26

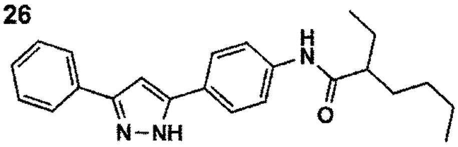

27

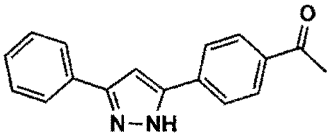

28

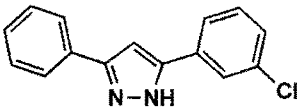

29

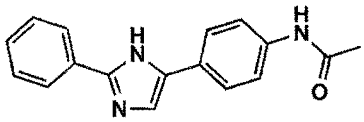

30

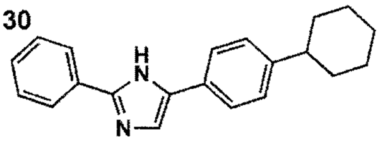

31

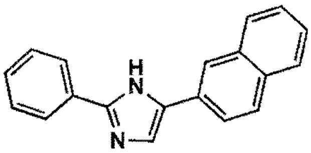

32

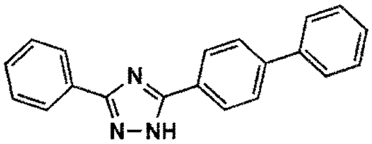

33

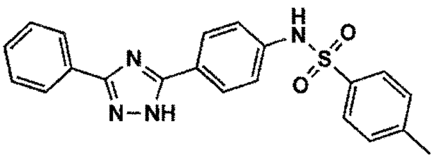

34

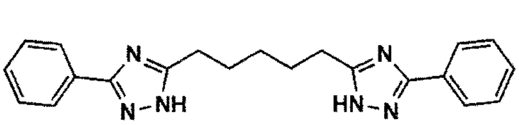

35

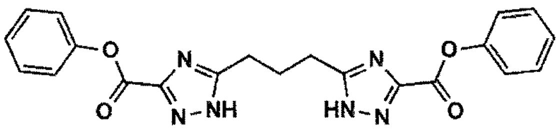

36

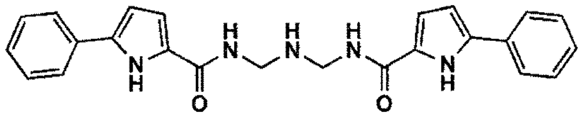

37

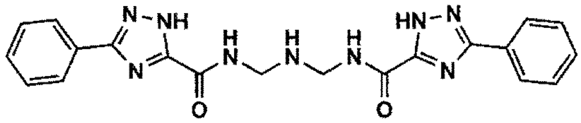

38

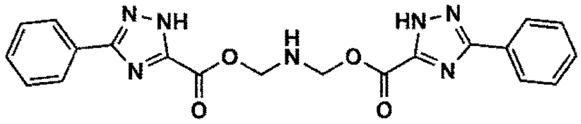

39

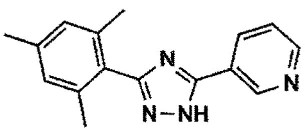

40

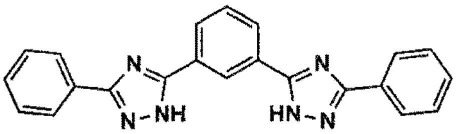

41

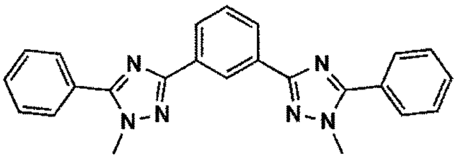

42

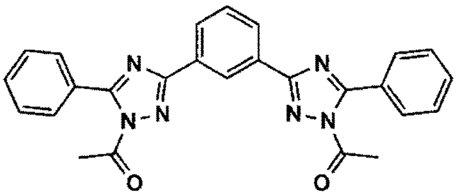

43

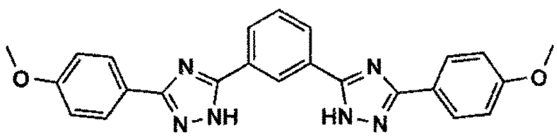

44

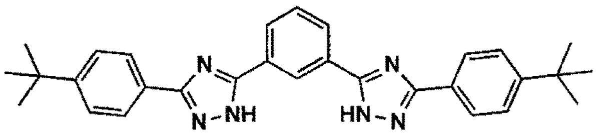

45

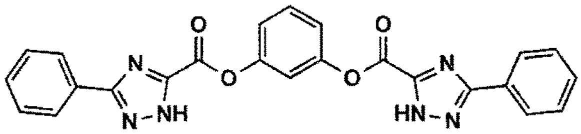

46

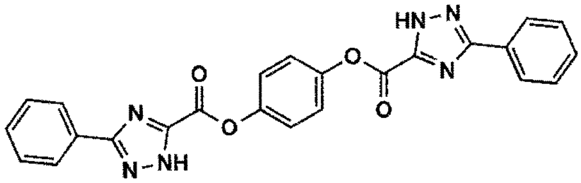

47

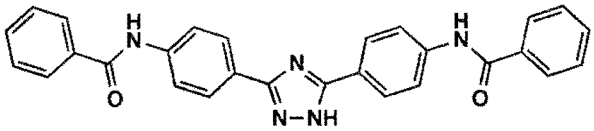

48

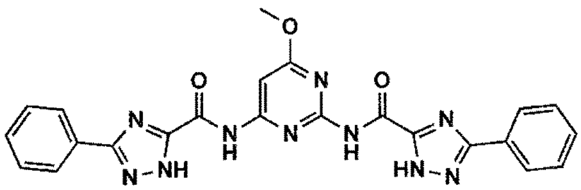

49

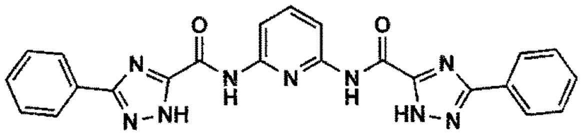

50

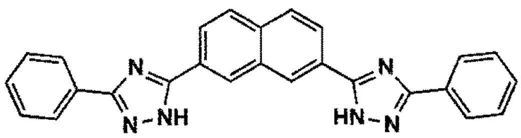

51

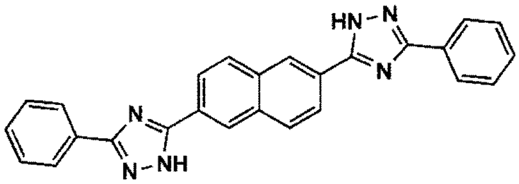

52

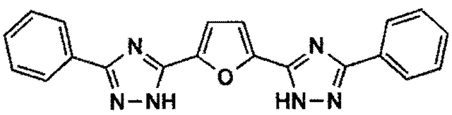

53

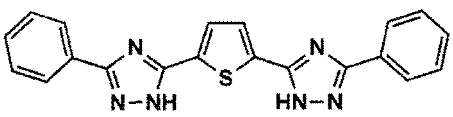

54

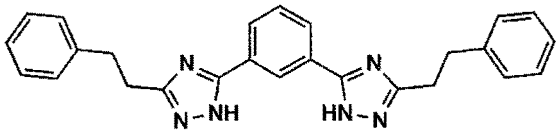

55

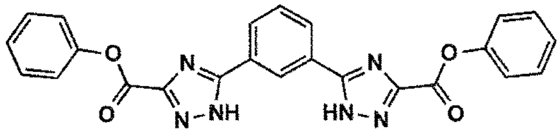

56

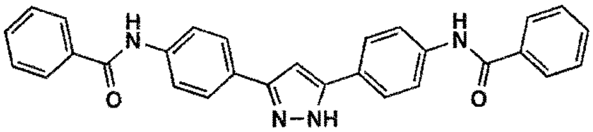

57

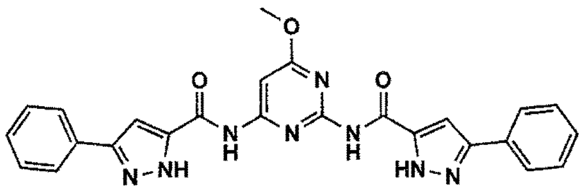

58

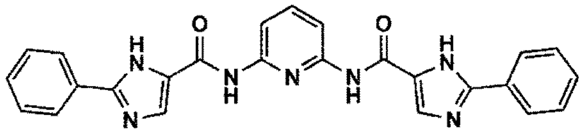

59

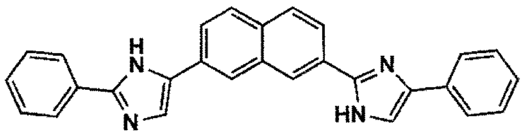

60

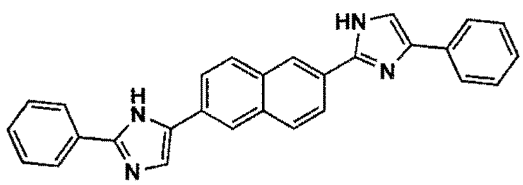

61

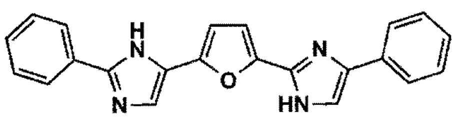

62

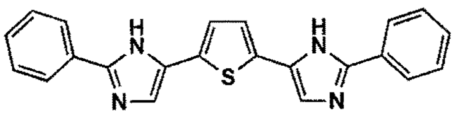

63

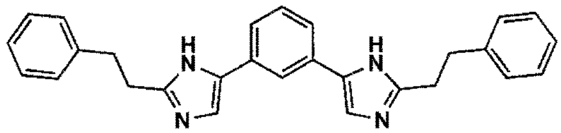

64

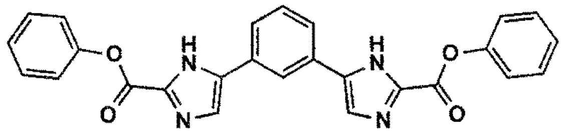

65

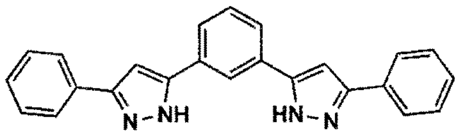

66

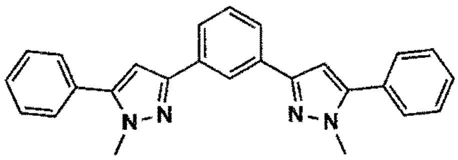

67

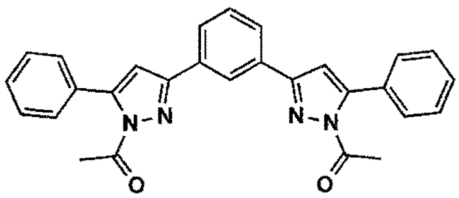

68

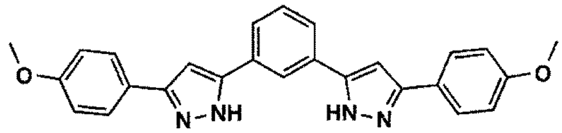

69

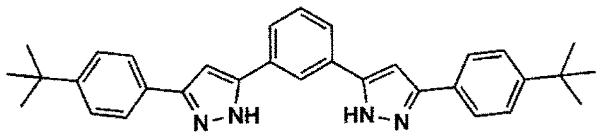

70

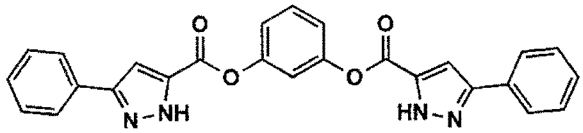

71

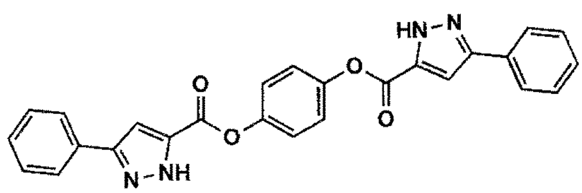

72

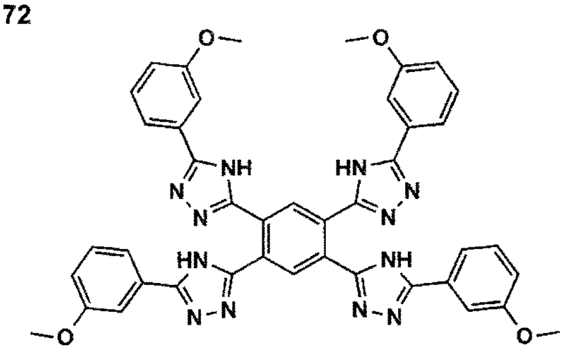

73

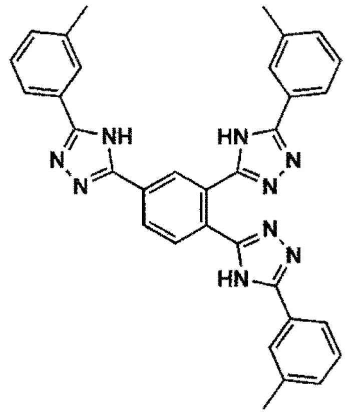

74

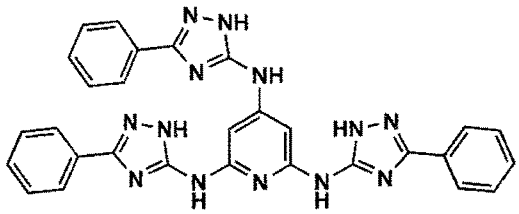

75

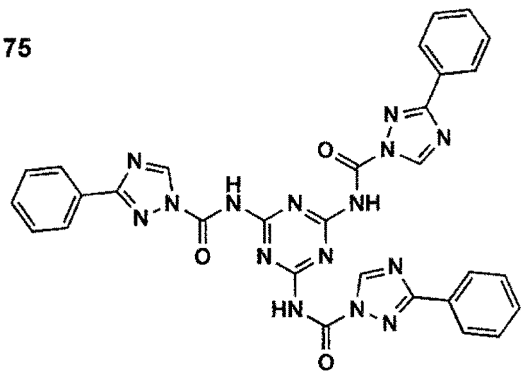

(Synthesis of Exemplified Compound 65)

Exemplified Compound 65 may be synthesized by the following scheme.

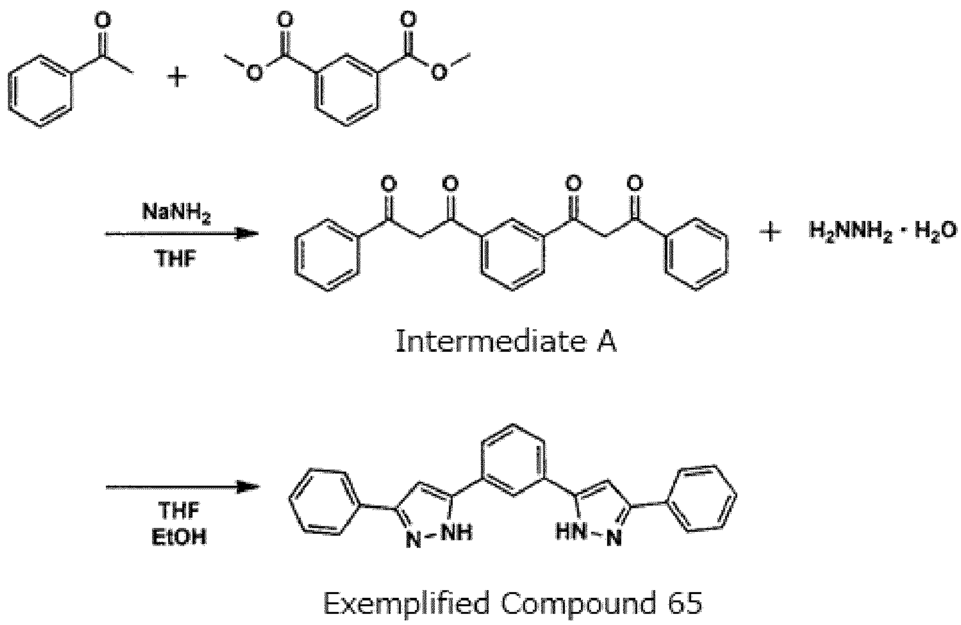

To 520 ml of dehydrated tetrahydrofuran, 80 g (0.67 mol) of acetophenone and 52 g (0.27 mol) of dimethyl isophthalate were added, and 52.3 g (1.34 mol) of sodium amide was added dropwise in a small amount while stirring under ice-water cooling and a nitrogen atmosphere. After stirring under ice water cooling for 3 hours, the mixture was stirred under water cooling for 12 hours. After neutralizing the reaction solution by adding concentrated sulfuric acid, pure water and ethyl acetate were added and the liquid was separated, and the organic layer was washed with pure water. The organic layer was dried over magnesium sulfate and the solvent was distilled off under reduced pressure. Methanol was added to the obtained crude crystals for suspension washing to obtain 55.2 g of Intermediate A.

To 300 mL of tetrahydrofuran and 200 mL of ethanol was added 55 g (0.15 mol) of the intermediate A, and 18.6 g (0.37 mol) of hydrazine monohydrate was added dropwise while stirring at room temperature. After completion of the dropwise addition, the mixture was heated at reflux for 12 hours. Pure water and ethyl acetate were added to the reaction solution to separate the mixture, and the organic layer was washed with pure water. The organic layer was dried over magnesium sulfate and the solvent was distilled off under reduced pressure. Purification of the obtained crude crystals by silica gel chromatography (ethyl acetate/heptane) gave 27 g of Exemplified Compound 66.

$^1$H-NMR spectrum of the obtained Exemplified Compound 66 is as follows. In order to avoid complication of the chemical shift due to the presence of tautomers, measurement was performed by adding a few drops of trifluoroacetic acid to the measurement solvent.

$^1$H-NMR (400 MHz, Solvents: deuterio DMSO, reference: tetramethylsilane) $\delta$ (ppm): 8.34 (1H, s), 7.87-7.81 (6H, m), 7.55-7.51 (1H, m), 7.48-7.44 (4H, m), 7.36-7.33 (2H, m), 7.29 (1H, s). Other compounds may be synthesized in a similar manner.

The compound A according to the present invention may be contained in the material for hot melt extrusion by adjusting an appropriate amount, and as the added amount, it is preferable to contain the compound A in the material for hot melt extrusion within the range of 0.1 to 30 mass %. In particular, it is preferable to contain the compound A in the range of 1 to 15 mass %, and it is particularly preferable to contain the compound A in the range of 5 to 15 mass %. Although the addition amount is depending on the type of the cellulose derivative and the type of the compound, the optimum value may be determined by the addition amount in which the material for the hot melt extrusion method of the present invention exhibits a desired physical property. Within this range, it is possible to reduce dimensional variation depending on changes in environmental temperature and humidity without impairing the mechanical strength of the material for a hot melt extrusion method of the present invention.

Further, as a method of adding the compound A, it may be added as a powder or after being dissolved in a solvent.

[4] Other additives

Further, examples of the various resin additives which may be used in combination with the material for a hot melt extrusion method of the present invention include a heat stabilizer, an antioxidant, a release agent, an ultraviolet absorber, a dye/pigment, a flame retardant, an antistatic agent, an antifogging agent, a lubricant/antiblocking agent, a fluidity improver, a plasticizer, a dispersant, and a fungicide. Two or more of these may be used in combination. Hereinafter, examples of the additive suitable for the material for hot melt extrusion of the present invention will be specifically described.

Examples of the heat stabilizer include a phosphorus-based compound. As the phosphorus-based compound, any conventionally known compound may be used. Specifically, there may be mentioned some of the following: phosphorus oxoacids such as phosphoric acid, phosphonic acid, phosphorous acid, phosphinic acid, polyphosphoric acid; acidic pyrophosphate metal salts such as acidic sodium pyrophosphate, acidic potassium pyrophosphate, and acidic calcium pyrophosphate; phosphates of Group 1 or Group 2 metals such as potassium phosphate, sodium phosphate, cesium phosphate, zinc phosphate; an organic phosphate compound, an organic phosphite compound, and an organic phosphonite compound. The content of the above-mentioned phosphorus-based compound is usually 0.001 to 1 parts by mass, preferably 0.01 to 0.7 parts by mass, and more preferably 0.03 to 0.5 parts by mass, per 100 parts by mass of the total of the thermoplastic resin and the compound according to the present invention.

Antioxidants are also called deterioration inhibitors. When a liquid crystal image display device is placed in a state of high humidity and high temperature, degradation of the three-dimensional shaped article may occur.

As such an antioxidant, a hindered phenol-based compound is preferably used, and examples thereof are as follows: 2,6-di-t-butyl-p-cresol, pentaerythrityl-tetrakis[3-(3,5-di-t-butyl-4-hydroxyphenyl)propionate], triethyleneglycol-bis[3-(butyl-5-methyl-4-hydroxyphenyl)propionate], 1,6-hexanediol-bis[3-(3,5-di-t-butyl-4-hydroxyphenyl)propionate,2,4-bis-(n-octylthio)-6-(4-hydroxy-3,5-di-t-butylanilino)-1,3,5-triazine, 2,2-thio-diethylenebis[3-(3,5-di-t-butyl-4-hydroxyphenyl)propionatel, octadecyl-3-(3,5-di-t-butyl-4-hydroxyphenyl)propionate, N, Mention may be made of N'-hexamethylenebis(3,5-di-t-butyl-4-hydroxycinnamamide), 1,3,5-trimethyl-2,4,6-tris(3,5-di-t-butyl-4-hydroxybenzyl)benzene, and tris-(3,5-di-t-butyl-4-hydroxybenzyl)-isocyanurate.

In particular, 2,6-di-t-butyl-p-cresol, pentaerythrityl-tetrakis[3-(3,5-di-t-butyl-4-hydroxyphenyl)propionate], triethyleneglycolscrews[3-(butyl-5-methyl-4-hydroxyphenyl)propionate] are preferable. Further, for example, a hydrazine-based metal deactivator such as N,N'-bis[3-(3,5-di-t-butyl-4-hydroxyphenyl)propionyl]hydrazine, or a phosphorus-based processing stabilizer such as tris(2,4-di-t-butylphenyl)phosphite may be used in combination.

The amount of these compounds to be added is preferably in the range of 1 ppm to 1.0% by mass based on the cellulose derivative, and more preferably in the range of 10 to 1000 ppm.

The three-dimensional shaped article may further contain fine particles (matting agent) as necessary in order to enhance the slip property of the surface.

The fine particles may be inorganic fine particles or organic fine particles. Examples of the inorganic fine particles include silicon dioxide (silica), titanium dioxide, aluminum oxide, zirconium oxide, calcium carbonate, calcium carbonate, talc, clay, calcined kaolin, calcined calcium silicate, hydrated calcium silicate, aluminum silicate, magnesium silicate, and calcium phosphate. Among them, silicon dioxide or zirconium oxide is preferred, and more preferably silicon dioxide in order to reduce an increase in haze of the obtained three-dimensional shaped article.

Examples of the fine particles of silicon dioxide include AEROSIL R972, R972V, R974, R812, 200, 200V, 300, R202, OX50, TT600, NAX50 (manufactured by Nippon Aerosil Co., Ltd.), SEAHOSTAR KE-P10, KE-P30, KE-P50, KE-P100 (manufactured by Nippon Shokubai Co., Ltd.). Among them, AEROSIL R972V, NAX50 and SEAHOSTAR KE-P30 are particularly preferable because they reduce frictional coefficients.

The primary particle diameter of the fine particles is preferably in the range of 5 to 50 nm, more preferably in the range of 7 to 20 nm. The larger the primary particle diameter is, the larger the effect of enhancing the slip property of the obtained shaped article is, but the transparency is apt to be lowered. Therefore, the fine particles may be contained as a secondary aggregate having a particle diameter in the range of 0.05 to 0.3 $\mu$m. The size of the primary particles of the fine particles or the secondary aggregates thereof may be obtained by observing the primary particles or the secondary aggregates at a magnification of 500,000 to 2,000,000 times with a transmission electron microscope, and as an average value of the particle diameters of 100 primary particles or the secondary aggregates.

The content of the fine particles is preferably in the range of 0.05 to 1.0% by mass, more preferably in the range of 0.1 to 0.8% by mass, based on the entire cellulose derivative.

Examples of the release agent include at least one compound selected from the group of aliphatic carboxylic acids, esters of aliphatic carboxylic acids and alcohols, aliphatic hydrocarbon compounds having a number average molecular weight of 200 to 15000, and polysiloxane-based silicone oils. The content of the release agent is usually 0.001 to 2 parts by mass, preferably 0.01 to 1 parts by mass, per 100 parts by mass of the total of the thermoplastic resin and the compound according to the present invention.

Examples of the ultraviolet absorption include an organic ultraviolet absorber such as a benzotriazole compound, a benzophenone compound, and a triazine compound in addition to an inorganic ultraviolet absorber such as cerium oxide and zinc oxide. Among these, an organic ultraviolet absorber is preferred. Particular preference is given to one compound selected from benzotriazole compounds, 2-(4,6-diphenyl-1,3,5-triazine-2-yl)-5-[(hexyl)oxy]-phenol,2-[4,6-bis(2,4-dimethylphenyl)-1,3,5-triazine-2-yl]-5-(octyloxy)phenol,2,2'-(1,4-phenylene)bis[4H-3,1-benzoxazin-4-one], and [(4-methoxyphenyl)-methylene]-propanedioic acid-dimethyl ester. The content of the ultraviolet absorber is usually 0.01 to 3 parts by mass, preferably 0.1 to 1 parts by mass, per 100 parts by mass of the total of the thermoplastic resin and the compound according to the present invention.

Examples of the dye/pigment include an inorganic pigment, an organic pigment, and an organic dye. Examples of the inorganic pigment include carbon black, a sulfide-based pigment such as cadmium red and cadmium yellow; a silicate-based pigment such as ultramarine; an oxide-based pigment such as titanium oxide, zinc flower, Bengal red, chromium oxide, iron black, titanium yellow, zinc-iron brown, titanium cobalt green, cobalt green, cobalt blue, copper-chromium black, and copper-iron black; and a chromic acid-based pigment such as chrome yellow and molybdate orange; and a ferrocyanide pigment such as Navy blue. The content of the dye/pigment is usually 5 parts by mass or less, preferably 3 parts by mass or less, and more preferably 2 parts by mass or less, per 100 parts by mass of the total of the thermoplastic resin and the compound according to the present invention.

Examples of the flame retardant include halogenated flame retardants such as polycarbonate of halogenated bisphenol A, brominated bisphenol epoxy resin, brominated bisphenol phenoxy resin, and brominated polystyrene; phosphoric acid ester flame retardants, organometallic salt flame retardants such as diphenylsulfone-3,3'-dipotassium disulfonate, diphenylsulfone-3-potassium sulfonate, and potassium perfluorobutanesulfonate; and polyorganosiloxane flame retardants, and phosphoric acid ester flame retardants are preferred. The content of the flame retardant is usually 1 to 30 parts by mass, preferably 3 to 25 parts by mass, and more preferably 5 to 20 parts by mass, per 100 parts by mass of the total of the thermoplastic resin and the compound according to the present invention.

In addition, various fillers may be blended. There is no particular limitation on the filler to be blended as long as it is generally used in this type of material for hot melt extrusion, and a powdery, fibrous, granular and plate-like inorganic filler may be preferably used, and a resin filler or a natural filler may also be preferably used.

[5] Manufacturing method of material for a hot melt extrusion method and shaped article

The material for the hot melt extrusion method of the present invention may be produced, for example, by mixing each of the above components using a mixer and then melt-kneading the mixture. As a mixer, a Banbury mixer, a roll mixer, or a Brabender mixer is used, and for melt-kneading, a single-screw kneading extruder, a twin-screw kneading extruder, or a kneader is used. Further, a method may be employed in which each component is not mixed in advance, or only a part of the component is mixed in advance and supplied to an extruder by a feeder to be melt-kneaded. In particular, a method in which a compound component having a polar group according to the present invention is supplied to an extruder without mixing other components and melt-kneaded by a feeder is preferred in terms of extrusion workability.

A method of producing a shaped article from a material for a hot melt extrusion method of the present invention is not particularly limited, and a molding method generally adopted for a thermoplastic resin may also be employed. Examples thereof include general injection molding method, ultra-high speed injection molding method, injection compression molding method, two-color molding method, hollow molding method such as gas assist, molding method using heat insulating mold, molding method using rapid heating mold, foam molding (including supercritical fluid), insert molding, IMC (in-mold coating molding) molding method, extrusion molding method, sheet molding method, thermal molding method, rotary molding method, laminated molding method, and press molding method. A molding method using the hot runner system may also be adopted.

Among them, a manufacturing process using a 3D printer is a preferred embodiment.

In particular, it is preferable that a material for a hot melt extrusion method comprising a cellulose derivative according to the present invention and a plasticizer and a compound A is melt-extruded and then cooled and solidified in the atmosphere or water to form a monofilament yarn. The monofilament yarn is preferably in the form of a continuous line, and may be wound around a bobbin and stored, or in the form of a skein, so that it may be formed into a compact form.

As a liquid used for cooling and solidification, water, ethylene glycol, polyethylene glycol, glycerin, and silicone may be used, but water having good workability and hardly causing environmental pollution is most preferred because it is not necessary to bring the liquid bath to a high temperature. Therefore, water is most preferred. The cooled and solidified monofilament yarn may be wound as it is after drying. Alternatively, if necessary, stretching may be performed in an atmosphere at a temperature of 20 to 80 °C. In the case of stretching, it may be performed in one stage or in multiple stages of two or more stages.

In the production method of the shaped article from the hot melt extrusion method material of the present invention, as the molding method by a 3D printer, a hot melt laminate method (FDM method), an ink jet method, a photoforming method, a gypsum powder lamination method, and a laser sintering method (SLS method) are listed. Among these it is preferable to use in the hot melt laminate method. Hereinafter, the case of the hot melt laminate method will be exemplified and explained.

A 3D printer generally has a chamber in which a heatable substrate, an extrusion head installed in a gantry structure, a heat melter, a guide for a hot melt extrusion material (kneaded product), a raw material supply unit such as a material cartridge installation unit for hot melt extrusion. Some 3D printers integrate an extruder head and a heat melter.

The extrusion head is mounted on the gantry structure so that it may be moved arbitrarily over the X-Y plane of the substrate. The substrate is a platform for constructing a target three-dimensional shaped article, or a supporting material, and it is preferable that the substrate has a specification capable of obtaining adhesiveness to a laminate by heating and warming, or improving dimensional stability of the obtained resin shaped article as a desired three-dimensional shaped article. The extrusion head and the substrate are configured that usually at least one is movable in the Z-axis direction perpendicular to the X-Y plane.

A mold filament for a 3D printer is fed from the raw material feed section, fed into the extrusion head by a pair of rollers or gears facing each other, heated and melted by the extrusion head, and extruded from the tip nozzle. For example, the signal transmitted based on the CAD model causes the extrusion head to feed and deposit the heat-melt extrusion material onto the substrate while moving its position. After this step is completed, the laminated deposit may be taken out from the substrate, and if necessary, the support material may be peeled off, or an extra portion may be cut to obtain a desired 3 dimensional shaped article.

As a means for continuously supplying the hot melt extrusion material to the extrusion head, there may be exemplified a method of feeding out and supplying the hot melt extrusion material, a method of supplying powder or liquid from a tank through a metering feeder, a method of extruding and supplying pellets or granules plasticized by an extruder, and the method of feeding out and supplying the hot melt extrusion material is most preferable from the viewpoint of simplicity of the process and supply stability.

When supplying a material for the hot melt extrusion method to a 3D printer, it is common to engage the material for the hot melt extrusion method with a drive roller such as a nip roller or a gear roller, and fed to the extrusion head while pulling. Here, in order to stabilize the supply of the raw material by making the gripping by the engagement between the material for the hot melt extrusion method and the driving roller stronger, it is preferable to transfer the minute concavo-convex shape onto the surface of the material for the hot melt extrusion method, or to blend an inorganic

additive, spreading agent, pressure-sensitive adhesive, or rubber for increasing the frictional resistance with the engagement portion.

In the material for a hot melt extrusion method of the present invention, the temperature for obtaining appropriate fluidity for extrusion is usually about 190 to 240 °C, which is a settable temperature that may be set by a general-purpose 3D printer, and in the manufacturing process used in the present invention, the temperature of the heated extrusion head is usually 230 °C or less, preferably 200 to 220 °C, and the substrate temperature is usually 80 °C or less, preferably 50 to 70 °C, to stably manufacture the shaped article.

The temperature (discharge temperature) of the material for the hot melt extrusion method discharged from the extrusion head is preferably 180 °C or higher, more preferably 190 °C or higher, while it is preferably 250 °C or less, more preferably 240 °C or less, even more preferably 230 °C or less. When the temperature of the material for a hot melt extrusion method is equal to or higher than the above-mentioned lower limit value, it is preferable to extrude a resin having high heat resistance, and it is also preferable from the viewpoint of preventing deterioration of appearance by leaving in the shaped article a fragment in which the material for a hot melt extrusion method is thinly stretched, which is generally called yarn drawing. On the other hand, when the temperature of the material for a hot melt extrusion method is equal to or lower than the above upper limit value, it is preferable because it is easy to prevent the occurrence of problems such as thermal decomposition of the thermoplastic resin, burning, smoking, odor, and stickiness, and it is also possible to discharge at high speed, and the molding efficiency tends to be improved.

The hot melt extrusion method material discharged from the extrusion head is preferably discharged in the form of filaments having a diameter of 0.01 to 1 mm, more preferably 0.02 to 0.5 mm, to form monofilament yarns. When formed of such a monofilament yarn, it becomes a shaped article having high versatility.

Further, a three-dimensional shaped article of the present invention is a three-dimensional shaped article containing cellulose acetate propionate, a plasticizer and a compound A, wherein a dimensional change width after 24 hours of standing in an environment at 80 °C and 90 %RH is within $\pm$ 5% of a dimension before standing.

In producing a shaped article by a 3D printer using a hot melt extrusion type material for 3D printer molding, when forming a shaped article while laminating a monofilamentary hot melt extrusion material discharged from the extrusion head, a monofilament yarn of the material for the hot melt extrusion method previously ejected and the hot melt extrusion material discharged thereon may produce unevenness of the surface of the molded article (step) due to insufficient adhesiveness with the monofilament yarn and discharge unevenness. If an uneven portion exists on the surface of the molded article, not only the appearance is deteriorated, but also a problem that the molded article is liable to be damaged may occur.

The material for a hot melt extrusion method for 3D printer molding of the present invention suppresses ejection unevenness at the time of molding, and the material for a hot melt extrusion method of the present invention may stably produce a shaped article excellent in appearance and surface properties.

When making a shaped article while laminating the material for a hot melt extrusion method of monofilament yarn discharged from the extrusion head by a 3D printer, there is a step of stopping the discharge of resin and moving the nozzle to the laminating point in the next step.

At this time, the resin may not be interrupted and a thin fiber of the material for a hot melt extrusion method may be generated, which may remain on the surface of the shaped article so as to pull a thread. When the above-mentioned yarn pulling occurs, a problem such as deterioration of the appearance of the shaped article may occur.

When forming a shaped article while laminating the material for the hot melt extrusion method of the monofilament yarn discharged from the extrusion head by a 3D printer, it may adhere to the nozzle portion of the extrusion head, further adhered hot melt extrusion method material is colored by heat, it may become black foreign matter (black spots and black streaks). When such a foreign substance is mixed into the shaped article, not only the appearance is deteriorated, but also the shaped article is easily damaged in some cases.

The hot melt extrusion material for a 3D printer of the present invention inventions is excellent in heat resistance and hardly cause coloration by heat even if it adhere to the nozzles, so that a shaped article having excellent external appearance may be stably produced.

In addition, in a preferred embodiment of the present invention, the shaped article may also be annealed at a temperature condition of 40 °C or higher and lower than the glass transition temperature (Tg) of the material for the heat melt extrusion method. The annealing treatment temperature is less than the above Tg, preferably 60 °C or higher, more preferably 70 °C or higher. When the annealing treatment temperature is 40 °C or higher, an improvement effect of increasing the strength is expected, and when the annealing treatment temperature is less than or equal to Tg, the resin is not melted, which is preferable. The treatment time is usually in the range of 5 min to 200 hr, preferably 1 to 100 hr, and more preferably 2 to 48 hr. The method of annealing treatment is not particularly limited, and in addition to a hot air dryer employed for a thermoplastic resin, a method of treating by far-infrared rays may be employed. During the annealing process, the shaped article may be left standing or may flow in a line, and the processing temperature may be changed in the middle.

[6] Application

The material for a hot melt extrusion method of the present invention is excellent in transparency, high rigidity, and heat resistance. The hot melt extrusion material of the present invention having such advantages may be used in a wide range of fields as a shaped article for a 3D printer, electric and electronic equipment and its components, OA equipment, information terminal equipment, mechanical components, home electric appliances, vehicle components, medical equipment, building members, various containers, leisure goods and miscellaneous goods, various applications such as lighting equipment. In particular, it may be expected to apply to electric and electronic equipment, vehicle members and medical equipment.

Examples of housings, covers, keyboards, buttons, and switch members for electric and electronic equipment, office automation equipment, and information terminal equipment include personal computers, game consoles, and display devices such as televisions; printers, copiers, scanners, faxes, electronic notebooks, PDAs, electronic desktop computers, electronic dictionaries, cameras, video cameras, mobile phones, drives and readers for recording media, housings for mice, ten-keys, CD players, MD players, portable radios, and portable audio players; covers, keyboards, buttons, and switch members.

Examples of vehicle members include head lamps and helmet shields. As the interior member, an inner door handle, a center panel, an instrumental panel, a console box, a luggage floor board, and a display housing such as a car navigation.

Examples of medical instruments include application to artificial hands and artificial limbs.

## Examples

Hereinafter, the present invention will be specifically described with reference to Examples, but the present invention is not limited thereto. In the examples, "parts" or "%" is used, but unless otherwise specified, it indicates "parts by mass" or "% by mass".

Example 1

<Molecular weight measurement of cellulose derivative>

Since the average molecular weight and the molecular weight distribution of the cellulose derivative may be measured using high performance liquid chromatography, the weight average molecular weight (Mw) may be calculated using this.

The measurement conditions are as follows.

| | |
|---|---|
| Solvent: | Dichloromethane |
| Columns: | Shodex K806, K805, K803 (three columns manufactured by Showa Denko K.K.) were connected and used. |
| Column temperature: | 25 °C |
| Sample concentration: | 0.1% by mass |
| Detector: | RI Model 504 (manufactured by GL Sciences Inc.) |
| Pumps: | L6000 (manufactured by Hitachi, Ltd.) |
| Flow rate: | 1.0 mL/min |
| Calibration curves: | Calibration curves with 13 samples of standard polystyrene STK standard polystyrene (manufactured by Tosoh Corporation) Mw = 500-1000000 were used. 13 samples are used at approximately equal intervals. |

<Measurement of substitution degree of cellulose derivative>

Based on ASTM D817-96, the substitution degree DS was determined as described below.

1.90 g of the dried cellulose derivative was precisely weighed, and 70 mL of acetone and 30 mL of dimethyl sulfoxide were added and dissolved, followed by further addition of 50 mL of acetone. 30 mL of IN sodium hydroxide aqueous solution was added while stirring, and the mixture was saponified for 2 hours. After adding 100 mL of hot water and washing the side of the flask, titration was performed with IN sulfuric acid with using phenolphthalein as indicator. Separately, a blank test was performed in the same manner as in the sample. The supernatant of the solution in which titration was completed was diluted 100 times, and the composition of the organic acid was measured by a conventional

method using an ion chromatograph. From the measurement results and the acid composition analysis results by ion chromatograph, the degree of substitution was calculated by the following formula.

$$TA = (B - A) x F/(1000 x W)$$

$$X = (162.14 x TA)/\{1 - 42.14 x TA + (1 - 56.06 x TA) x (P/A)\}$$

$$Y = X x (P/A)$$

$$DS = X + Y$$

A: Titration amount of sample (mL)
B: Titration amount of blank (mL)
F: Titer of IN sulfuric acid
W: Sample mass (g)
TA: Total amount of organic acid (mol/g)
P/A: Molar ratio of acetic acid to propionic acid as determined by ion chromatography
X: Degree of substitution by acetic acid
Y: Degree of substitution by propionic acid

<Fractionation of cellulose>

Cellulose having different molecular weights was separated with reference to the method described in Indian J. Chem. Tech., Vol. 3 (1996) p.333.

10 parts by mass of α-cellulose extracted from a Leucaena tree (Leucaena Leucocephala) and 12 parts by mass of paraformaldehyde are dissolved in 360 parts by mass of dimethyl sulfoxide (hereinafter, abbreviated as DMSO) by heating at 100 °C for 5 hours, and then 620 parts by weight of DMSO was added and cooled to 5 °C.

While stirring this DMSO solution, 100 parts by mass of pure water was added, and the produced precipitate was filtered to obtain a solid obtained as cellulose "a".

<<Synthesis of cellulose derivative>>

Various cellulose acetate propionates were synthesized with reference to Polymers for Advanced Technologies, vol. 14 (2003), p. 478.

<Synthesis of cellulose derivative A1>

To a solution obtained by mixing 100 parts by mass (100 parts by mole) of cellulose "a", 420 parts by mass (1600 parts by mole) of lithium chloride, 11 parts by mass (30 parts by mole) of acetic acid, and 130 parts by mass (286 parts by mole) of propionic acid into 1000 parts by mass (10 times by volume) of dimethylacetamide, 405 parts by mass (320 parts by mole) of dicyclohexylcarbodiimide (DCC), 130 parts by mass (170 parts by mole) of dimethylaminopyridine, and 130 parts by mass (70 parts by mole) of dimethylaminopyridine-tosylate were added at room temperature. Then, the mixture was stirred for 24 hours until DCC was completely consumed. After completion of the reaction, the white precipitate produced by adding 5000 parts by mass of distilled water was filtered off. The filtered solid was washed several times with pure water, followed by Soxhlet extraction with methanol for 24 hours, and finally dried in vacuo at 70 °C to obtain a cellulose derivative A1. The degree of substitution and molecular weight of the obtained cellulose derivative were carried out according to the aforementioned measurement method, and the measurement results were described in Table II.

<Synthesis of cellulose derivative A2>

In synthesizing the cellulose derivative A1, synthesis was carried out in the same manner as in cellulose derivative A1, except that 11 parts by mass of acetic acid (30 parts by mol) was changed to 30 parts by mass (80 parts by mol), 130 parts by mass of propionic acid (286 parts by mol) was changed to 100 parts by mass (220 parts by mol),

and 405 parts by mass (320 parts by mol) of DCC was changed to 380 parts by mass (300 parts by mol) to obtain a cellulose derivative A2.

<Synthesis of cellulose derivative A3>

Similarly, synthesis was carried out in the same manner as in cellulose derivative A1, except that 11 parts by mass (30 parts by mol) of acetic acid was changed to 70 parts by mass (110 parts by mol), 130 parts by mass (286 parts by mol) of propionic acid was changed to 50 parts by mass (110 parts by mol), and 405 parts by mass (320 parts by mol) of DCC was changed to 279 parts by mass (220 parts by mol) to obtain a cellulose derivative A3.

<Synthesis of Cellulose Derivative A4>

Similarly, synthesis was carried out in the same manner as in cellulose derivative A1, except that 11 parts by mass (30 parts by mol) of acetic acid was changed to 59 parts by mass (160 parts by mol), 130 parts by mass (286 parts by mol) of propionic acid was changed to 50 parts by mass (110 parts by mol), and 405 parts by mass (320 parts by mol) of DCC was changed to 342 parts by mass (270 parts by mol) to obtain a cellulose derivative A4.

<Synthesis of Cellulose Derivative A5>

Similarly, synthesis was carried out in the same manner as in cellulose derivative A1, except that 11 parts by mass of acetic acid (30 parts by mol) was changed to 78 parts by mass (210 parts by mol), 130 parts by mass (286 parts by mol) of propionic acid was changed to 41 parts by mass (90 parts by mol), and 405 parts by mass (320 parts by mol) of DCC was changed to 380 parts by mass (300 parts by mol) to obtain a cellulose derivative A5.

<Synthesis of Cellulose Derivative A6>

Similarly, synthesis was carried out in the same manner as in cellulose derivative A1, except that 11 parts by mass (30 parts by mol) of acetic acid was changed to 96 parts by mass (260 parts by mol), 130 parts by mass (286 parts by mol) of propionic acid was changed to 23 parts by mass (50 parts by mol), and 405 parts by mass (320 parts by mol) of DCC was changed to 380 parts by mass (300 parts by mol) to obtain a cellulose derivative A6.

<Synthesis of Cellulose Derivative A7>

Similarly, synthesis was carried out in the same manner as in cellulose derivative A1, except that 11 parts by mass of acetic acid (30 parts by mol) was removed and 130 parts by mass of propionic acid (286 parts by mol) was changed to 140 parts by mass (308 parts by mol) to obtain a cellulose derivative A7.

Table II

| No. | Cellulose derivative | | | | |
|---|---|---|---|---|---|
| | Raw material | Degree of substitution | | | Weight average molecular weight |
| | | X (Ac group) | Y (Pr group) | X+Y | |
| A1 | Raw material "a" | 0.2 | 2.6 | 2.8 | 331000 |
| A2 | Raw material "a" | 0.6 | 2.0 | 2.6 | 341000 |
| A3 | Raw material "a" | 1.0 | 1.0 | 2.0 | 307000 |
| A4 | Raw material "a" | 1.4 | 1.0 | 2.4 | 319000 |
| A5 | Raw material "a" | 2.1 | 0.5 | 2.6 | 322000 |
| A6 | Raw material "a" | 2.3 | 0.3 | 2.6 | 325000 |
| A7 | Raw material "a" | 0.0 | 2.8 | 2.8 | 327000 |

<Plasticizer>

The following plasticizer was used.

Trimethylolpropane tribenzoate (TMPBT): manufactured by ADEKA Corporation

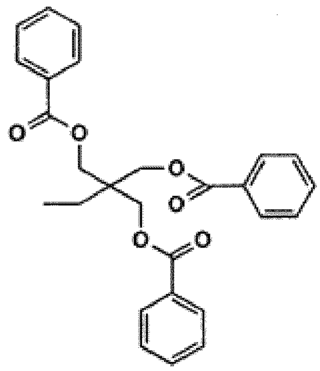

<Additives>

The following compounds were used as an additive (Compound A) having a benzene ring and a 5-membered heterocycle in the structure.

Additive 1

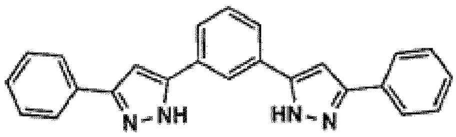

Additive 2

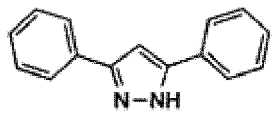

Further, the following compounds were used as an additive in Comparative Examples.

Additive 3

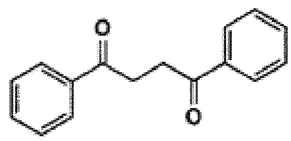

Additive 4

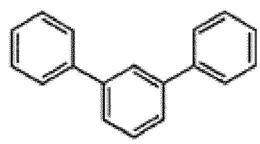

The NICS values in Table III was classified according to the following criteria based on the value of the ring having the largest NICS value among the aromatic rings in the above compound.

A: The value of the ring with the largest NICS value among the aromatic rings is -14 or more and -10 or less.
B: The value of the ring having the largest NICS value among the aromatic rings is less than 14, or more than -10.

Table III

| Type | NICS value | Remarks |
|---|---|---|
| Additive 1 | A | Corresponds to Compound A |
| Additive 2 | A | Corresponds to Compound A |
| Additive 3 | B | Does not correspond to Compound A |
| Additive 4 | B | Does not correspond to Compound A |
| A: Among the aromatic rings, the value of the ring with the highest NISC value is -14 or more and -10 or less.<br>B: Among the aromatic rings, the value of the ring with the highest NISC value is less than -14 and exceeds -10. | | |

<<Preparation of monofilament yarn containing material for hot melt extrusion method and shaped article>>

<Preparation of monofilament yarn No. 1 containing material for hot melt extrusion method and shaped article No. 1>

As a material for a hot melt extrusion method, a plasticizer was added to the cellulose derivative so that the amount of the plasticizer added was 5.0% by mass and the additive 1 was 3.0% by mass. A twin-screw kneading extruder ("BT-30" manufactured by Plastic Engineering Laboratory Co., Ltd., L/D = 30) was used to combine the resin with the plasticizer and the additive to obtain a monofilament yarn. The monofilament yarn was pelletized with a length of 2 mm by a strand cutter, and injection molding was carried out using a small kneader manufactured by Xplore Corporation so as to have a length of 30 (vertical) x 30 mm (horizontal) and a thickness of 100 μm to obtain a test piece of shaped article No. 1 for measuring the elastic modulus.

<Preparation of monofilament yarns No. 2 to No. 23 containing material for hot melt extrusion method and shaped articles No. 2 to 23>

Similarly, monofilament yarns No. 2 to No. 23 containing a material for a hot melt extrusion method were prepared by changing the amount of the plasticizer added, the type of the additive, and the amount of the additive so as to have the composition described in Table IV, and a test pieces of a shaped article No. 2 to No. 23 were obtained in the same manner.

<<Evaluation>>

(1) Elastic modulus (tensile modulus of elasticity)

For the materials for hot melt extrusion method, test pieces prepared with injection molded using a small kneader manufactured by Xplore Corporation under the above conditions and conditions in which additives 1 to 4 were not included were subjected to a tensile test using TENSILON universal tester (RTC-1250A type manufactured by Orientec Co., Ltd.), and their elastic moduli were compared.

Tensile test was carried out as follows. In accordance with the test method described in JIS K7127, using the test machine, the above test piece was subjected to a tensile test with the chuck-to-chuck distance of 50 mm in the MD direction (direction X) which is the injection direction of the test piece, and the tensile modulus of elasticity in the MD direction (direction X) was measured. Measurements were performed at 23 °C under 55 %RH. The unit is GPa.

Elastic modulus ratio = Elastic modulus (conditions for preparing the material for a hot melt extrusion method)/Elastic modulus (conditions of removing the additive from the material for a hot melt extrusion method) However, the material for the hot melt extrusion method No. 22 contains only a plasticizer, therefore the evaluation items related to elastic modulus are marked with "CC" in parentheses.

AA: A test piece containing a plasticizer and an additive has a tensile modulus ratio of 10% or more larger than that of a test piece containing only a plasticizer, and is particularly excellent in elastic modulus.
BB: A test piece containing a plasticizer and an additive has a high tensile modulus ratio in the range of 1% to less than 10% relative to a test piece containing only a plasticizer, and excellent in elastic modulus.
CC: A test piece containing a plasticizer and an additive has a tensile modulus ratio of equal to or lower than that of a test piece containing only a plasticizer, and is inferior in elastic modulus.

(2) Dimensional stability at high temperature and high humidity

Using the monofilament yarns for a 3D printer described above, a rectangular parallelepiped of 30 (vertical) x 30 (horizontal) x 4 (thickness) (mm) was formed by an FDM printer (manufactured by Leapfrog Corporation, Creatr dual). The lengths of four randomly selected square portions of the rectangular parallelepiped before and after 24 hours under high temperature and high humidity conditions (80 °C, 90 %RH) were measured and used as the average dimension. Then, a value of the dimensional change rate calculated with (average dimension - 30)/30 was obtained.

AA: 0 to ± 3% or less, with particularly excellent dimensional stability
BB: ± 3% or more, ± 5% or less, with excellent dimensional stability
CC: Larger than ± 5% and less dimensionally stable

The composition and evaluation results of the materials for a hot melt extrusion method described above are shown in Table IV.

Table IV

| Monofilament yarn containing a material for a hot melt extrusion method / shaped article No. | Cellulose derivative | Additive | | | Evaluation | | Remarks |
|---|---|---|---|---|---|---|---|
| | | Plasticizer Added amount [% by mass] | Type | Added amount [% by mass] | Elastic modulus ratio | Dimensional stability | |
| 1 | A1 | 5.0 | Additive 1 | 3.0 | BB | BB | Present invention |
| 2 | A1 | 5.0 | Additive 1 | 5.0 | BB | AA | Present invention |
| 3 | A1 | 5.0 | Additive 1 | 10.0 | AA | AA | Present invention |
| 4 | A1 | 5.0 | Additive 2 | 5.0 | BB | BB | Present invention |
| 5 | A1 | 5.0 | Additive 2 | 10.0 | AA | BB | Present invention |
| 6 | A1 | 5.0 | Additive 2 | 5.0 | BB | BB | Present invention |
| 7 | A1 | 5.0 | Additive 3 | 10.0 | cc | CC | Comparative Example |
| 8 | A1 | 5.0 | Additive 4 | 5.0 | CC | CC | Comparative Example |
| 9 | A2 | 5.0 | Additive 1 | 5.0 | BB | AA | Present invention |
| 10 | A2 | 5.0 | Additive 3 | 5.0 | cc | CC | Comparative Example |
| 11 | A3 | 5.0 | Additive 1 | 10.0 | AA | AA | Present invention |
| 12 | A3 | 5.0 | Additive 2 | 10.0 | AA | BB | Present invention |
| 13 | A3 | 5.0 | Additive 3 | 10.0 | CC | CC | Comparative Example |

(continued)

| Monofilament yarn containing a material for a hot melt extrusion method / shaped article No. | Cellulose derivative | Additive | | | Evaluation | | Remarks |
|---|---|---|---|---|---|---|---|
| | | Plasticizer Added amount [% by mass] | Type | Added amount [% by mass] | Elastic modulus ratio | Dimensional stability | |
| 14 | A3 | 5.0 | Additive 4 | 10.0 | CC | CC | Comparative Example |
| 15 | A4 | 5.0 | Additive 2 | 5.0 | BB | BB | Present invention |
| 16 | A4 | 5.0 | Additive 2 | 10.0 | AA | BB | Present invention |
| 17 | A5 | 5.0 | Additive 1 | 10.0 | AA | AA | Present invention |
| 18 | A5 | 5.0 | Additive 2 | 5.0 | BB | BB | Present invention |
| 19 | A5 | 5.0 | Additive 4 | 5.0 | CC | CC | Comparative Example |
| 20 | A6 | 5.0 | Additive 1 | 5.0 | CC (Decomposition) | CC | Comparative Example |
| 21 | A7 | 5.0 | Additive 2 | 5.0 | cc | CC | Comparative Example |
| 22 | A1 | 20.0 | - | - | (CC) | (CC) | Comparative Example |
| 23 | A1 | - | Additive 1 | 20.0 | AA | Cannot be modeled | Comparative Example |

From the results of Table IV, it is apparent that a material for a hot melt extrusion method containing a cellulose derivative, a plasticizer, and a compound A containing a partial structure of a specified range of NICS value as a constitution of the present invention is excellent in elastic modulus when processed into a shaped article and dimensional stability at high temperature and high humidity.

Especially in the structure, the level using the additive 1 having two rings of pyrazole ring was excellent in elastic modulus and dimensional stability.

**Industrial Applicability**

Since the material for a hot melt extrusion method is excellent in elastic modulus and dimensional stability at high temperature and high humidity of a shaped article, the material for a hot melt extrusion method of the present invention is suitably used as a modeling material for a 3D printer.

## Claims

1. A material for a hot melt extrusion method containing at least a cellulose derivative and an additive,

   wherein the cellulose derivative is cellulose acetate propionate and when a degree of substitution of an acetyl group is X and a degree of substitution of a propionyl group is Y, the cellulose derivative satisfies the following Expression (1) and Expression (2); and
   the additive contains a plasticizer and a compound A containing a partial structure having a NICS value in the range of -14 or more and -10 or less,

$$\text{Expression (1):}\quad 2.0 \leq X + Y \leq 3.0$$

$$\text{Expression (2):}\quad 0.5 \leq Y \leq 2.6.$$

2. The material for a hot melt extrusion method described in claim 1, wherein the compound A has a benzene ring and a 5-membered heterocycle in the structure.

3. The material for a hot melt extrusion method described in claim 1 or 2, wherein a content of the compound A is in the range of 0.1 to 30 mass %.

4. A modeling material for a 3D printer that is a monofilament yarn, wherein the monofilament yarn contain the material for a hot melt extrusion method described in any one of claims 1 to 3.

5. A method for producing of a modeling material for a 3D printer, comprising the steps of:

   melt-extruding the material for a hot melt extrusion method described in any one of claims 1 to 3; and then cooling and solidifying the melt-extruded material in the atmosphere or water to form monofilament yarn.

6. A three-dimensional shaped article containing the material for a hot melt extrusion method described in any one of claims 1 to 3, wherein the three-dimensional shaped article has an amount of dimensional change after leaving for 24 hours in an environment of 80 °C and 90 %RH within ± 5% of a dimensions before leaving the article.

## INTERNATIONAL SEARCH REPORT

International application No. PCT/JP2020/002708

A. CLASSIFICATION OF SUBJECT MATTER
Int. Cl. C08K5/10(2006.01)i, C08K5/34(2006.01)i, C08L1/14(2006.01)i, C08J5/00(2006.01)i, B33Y70/00(2020.01)i, B33Y80/00(2015.01)i, B29C64/118(2017.01)i, B29C64/314(2017.01)i
FI: C08L1/14, B29C64/314, B29C64/118, C08K5/34, C08K5/10, C08J5/00 CEP, B33Y70/00, B33Y80/00

According to International Patent Classification (IPC) or to both national classification and IPC

B. FIELDS SEARCHED

Minimum documentation searched (classification system followed by classification symbols)
Int. Cl. C08K5/10, C08K5/34, C08L1/14, C08J5/00, B33Y70/00, B33Y80/00, B29C64/118, B29C64/314

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2008/120596 A1 (KONICA MINOLTA OPTO, INC.) 09 October 2008, claims, paragraphs [0066]-[0087], examples | 1-3<br>4-6 |
| X<br>A | JP 2009-96955 A (KONICA MINOLTA OPTO, INC.) 07 May 2009, claims, examples | 1-3<br>4-6 |
| X<br>A | JP 2006-113175 A (KONICA MINOLTA OPTO, INC.) 27 April 2006, claims, examples | 1-3<br>4-6 |
| X<br>A | WO 2008/007566 A1 (KONICA MINOLTA OPTO, INC.) 17 January 2008, claims, examples | 1-3<br>4-6 |
| X<br>A | JP 2006-124629 A (KONICA MINOLTA OPTO, INC.) 18 May 2006, claims, examples | 1-3<br>4-6 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05.03.2020 | 17.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/002708

| Patent Documents referred to in the Report | Publication Date | Patent Family | Publication Date |
|---|---|---|---|
| WO 2008/120596 A1 | 09.10.2008 | US 2010/0069535 A1<br>claims, paragraph [0083]-[1000], examples<br>CN 101680989 A<br>KR 10-2010-0014688 A | |
| JP 2009-96955 A | 07.05.2009 | (Family: none) | |
| JP 2006-113175 A | 27.04.2006 | US 2006/0078754 A1<br>claims, examples<br>KR 10-2006-0052143 A<br>CN 1760245 A<br>TW 200626618 A | |
| WO 2008/007566 A1 | 17.01.2008 | US 2008/0013173 A1<br>claims, examples<br>TW 200823253 A | |
| JP 2006-124629 A | 18.05.2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5371473 B
- JP 10045804 A
- JP 2017170881 A
- JP 2006113239 A


### Non-patent literature cited in the description


- *J. Am. Chem. Soc.,* 1996, vol. 118, 6317
- *Canadian Journal of Chemistry,* 2004, vol. 82, 50-69
- *The Journal of Organic Chemistry,* 2000, vol. 67, 1333-1338
- *Indian J. Chem. Tech.,* 1996, vol. 3, 333
- *Polymers for Advanced Technologies,* 2003, vol. 14, 478